# EUROPÄISCHE PATENTSCHRIFT

(11) **EP 3 650 608 B1**
(45) Veröffentlichungstag und Bekanntmachung des Hinweises auf die Patenterteilung: **07.06.2023**
(21) Anmeldenummer: 18204851.2
(22) Anmeldetag: 07.11.2018
(51) Int. Cl.: E04B 1/68, B29D 99/00, E06B 1/64, E06B 1/62

(54) **VERFAHREN ZUM HERSTELLEN EINER DICHTBANDROLLE**
METHOD FOR PRODUCING A ROLL OF SEALING STRIP
PROCÉDÉ DE FABRICATION D'UN ROULEAU DE BANDE D'ÉTANCHÉITÉ

(43) Veröffentlichungstag der Anmeldung: 13.05.2020
(60) Teilanmeldung: 20191034.6
(73) Patentinhaber: ISO-Chemie GmbH, 73431 Aalen (DE)
(72) Erfinder:
(74) Vertreter: Wächter, Jochen

(56) Entgegenhaltungen:
- EP-A1- 2 990 551
- EP-A1- 2 990 552
- EP-A1- 3 124 712
- EP-A1- 3 346 068
- EP-A2- 2 423 396
- DE-C1- 3 544 277

## Beschreibung

Die vorliegende Erfindung betrifft ein Verfahren zum Herstellen einer Dichtbandrolle mit einer Mehrzahl innenliegender Sperrschichten.

Von Dichtbandrollen abgewickelte Dichtbänder werden zum Abdichten von Fugen zwischen einem Rahmenprofil, zum Beispiel eines Fensters oder einer Tür, und einer Gebäudemauer verwendet, um die Fugen gegen Luftzug und Schlagregen abzudichten. Üblicherweise sind solche Dichtbänder zur platzsparenden Lagerung, zum Transport und zur besseren Handhabung während der Montage komprimiert zu Dichtbandrollen aufgewickelt. Neben der Luftdurchlässigkeit und der Schlagregendichtheit kommt dem Wasserdampfdiffusionswiderstand des Dichtbands als einer der wesentlichen Dichtbandeigenschaften besondere Bedeutung zu. Zusätzlich vorgesehene Sperrschichten auf einer Seitenflanke des Dichtbands oder parallel zu einer Seitenflanke des Dichtbands innerhalb desselben erhöhen die Dampfundurchlässigkeit des Dichtbands zwischen einer Rauminnenseite und einer Raumaußenseite. Eine solche Sperrschicht weist gegenüber dem Schaumstoff des Dichtbands einen erhöhten Wasserdampfdiffusionswiderstand auf und ist dadurch geeignet, die Wasserdampfdiffusion durch das Dichtband zu reduzieren. Ein Dichtband mit innenliegenden Sperrschichten ist beispielsweise aus der EP 2 990 551 A1 bekannt.

Ist ein solches Dichtband in einer Fuge zwischen einem Rahmenelement und einem Mauerwerk eingefügt, liegt es dort mit einer Unterseite an dem Rahmenelement und mit einer gegenüberliegenden Oberseite am der Fuge zugewandten Mauerabschnitt an. Die Sperrschicht am oder im Dichtband erstreckt sich über den gesamten Fugenquerschnitt vom Rahmenelement zum Mauerwerk. Folglich verläuft ein an die Oberseite des Dichtbands angrenzender Rand der Sperrschicht entlang des Mauerwerks. Das Mauerwerk weist bedingt durch die Montagearbeiten beim Einbau von Türen oder Fenstern in der Regel eine raue bis sehr unebene Oberfläche auf. Das Dichtband, das aus weichem Schaumstoff gebildet ist, kann sich aufgrund seiner Flexibilität an diese Unebenheiten anpassen. Die zumindest eine Sperrschicht ist jedoch verhältnismäßig streif und insbesondere der an den Mauerwerksabschnitt angrenzende Rand der Sperrschicht kann sich dem Profil des Mauerwerksabschnitts regelmäßig nicht vollständig anpassen. In solchen Bereichen kommt es daher zur Bildung von Zwischenräumen zwischen dem Mauerwerk und der zumindest einen Sperrschicht, durch die eine Wasserdampfdiffusion im Wesentlichen ungehindert stattfinden kann und somit die Sperrschicht umgeht. Dadurch wird die Wasserdampfundurchlässigkeit des Dichtbands negativ beeinflusst beziehungsweise weist im Einbauzustand des Dichtbands, in dem dieses zwischen dem Rahmenelement und dem Mauerwerk aufgenommen ist, einen geringeren Wert auf, als das Dichtband bei vollständigem Anliegen aufweisen würde.

Bei der Altbausanierung kann es vorkommen, dass ein ausgebauter alter Fensterrahmen eine umlaufende Aussparung im Mauerwerk hinterlässt. Die EP 3 124 712 A1 schlägt daher vor, auf der Oberseite eines Dichtbands einen Schaumstoff umfassenden Vorsprung vorzusehen, der in eine solche Aussparung eintritt, um auch in diesem Bereich eine Dämmwirkung bereitzustellen.

Aus der EP 3 346 068 A1 ist ein Schaumstoff für ein Fugendichtungsband bekannt, der mit einer Substanz ausgerüstet ist, die die Wärmeleitfähigkeit des Schaumstoffs herabsetzt. In einer Ausführungsform kann es sich bei der Substanz um eine Beschichtung auf der Oberseite des Dichtungsbands handeln, die ein Aerogel umfasst.

Es ist die Aufgabe der vorliegenden Erfindung, ein Verfahren zum Herstellen einer Dichtbandrolle bereitzustellen, das es ermöglicht, die Dichteigenschaften des Dichtbands zu verbessern.

Diese Aufgabe wird durch die Merkmale des Anspruchs 1 gelöst. Vorteilhafte Ausführungsformen sind Gegenstand der abhängigen Unteransprüche.

Erfindungsgemäß umfasst ein Verfahren zum Herstellen einer Dichtbandrolle die Schritte:
Bereitstellen einer Schaumstoff-Sperrschicht-Bahn, die eine Mehrzahl von in einer Querrichtung nebeneinander angeordneten Schaumstoffstreifen und zumindest eine Sperrschicht umfasst, wobei zwischen jeweils zwei aneinander angrenzenden Schaumstoffstreifen eine Sperrschicht angeordnet ist, wobei die Schaumstoff-Sperrschicht-Bahn eine Oberseite, eine Unterseite und zwei die Oberseite und die Unterseite verbindende Seitenflanken und eine Längsrichtung aufweist, die parallel zur Unterseite der Schaumstoff-Sperrschicht-Bahn und quer zur Querrichtung ausgerichtet ist;
Aufbringen einer Abdeckschicht auf die Oberseite und/oder die Unterseite der Schaumstoff-Sperrschicht-Bahn zum Bilden einer beschichteten Schaumstoff-Sperrschicht-Bahn;
Durchtrennen der Abdeckschicht in Längsrichtung im Bereich von zumindest zwei Schaumstoffstreifen und beabstandet zu jeder an diese Schaumstoffstreifen angrenzenden Sperrschicht und dadurch bilden von Teilabschnitten der Abdeckschicht, wobei ein Teilabschnitt der Abdeckschicht zumindest zwei aneinander angrenzende Schaumstoffstreifen zumindest teilweise überdeckt; und
Bilden einer Dichtbandrolle durch
   (i) Aufwickeln der beschichteten Schaumstoff-Sperrschicht-Bahn um eine Drehachse zu einer Dichtbandrolle; oder
   (ii) Aufwickeln der beschichteten Schaumstoff-Sperrschicht-Bahn um eine Drehachse zu einer Zwischenrolle und Durchtrennen der Zwischenrolle an einer oder an mehreren Stellen in axialer Richtung, um eine Mehrzahl von Dichtbandrollen zu erzeugen, die weniger breit sind als die Zwischenrolle; oder
   (iii) Durchtrennen der beschichteten Schaumstoff-Sperrschicht-Bahn in Längsrichtung zur Bildung von Schaumstoff-Sperrschicht-Streifen und Aufwickeln der Schaumstoff-Sperrschicht-Streifen um eine Drehachse zu einzelnen Dichtbandrollen.

Auf diese Weise wird ein zu einer Dichtbandrolle aufgewickeltes Dichtband bereitgestellt, das auf der Oberseite und/oder Unterseite Teilabschnitte einer Abdeckschicht aufweist, die quer zur zumindest einen innenliegenden Sperrschicht ausgerichtet sind und diese überdecken. Zumindest in einem Einbauzustand des Dichtbands, in dem dieses in eine Fuge zwischen einem Rahmenelement und einem Mauerwerksabschnitt eingefügt ist, grenzt die zumindest eine innenliegende Sperrschicht unmittelbar an den sie überdeckenden Teilabschnitt der Abdeckschicht an, sodass im Wesentlichen keine ungehinderte Wasserdampfdiffusion zwischen der Sperrschicht und dem Teilabschnitt der Abdeckschicht möglich ist. Der jeweilige Teilabschnitt der Abdeckschicht wiederum liegt flächig am Mauerwerksabschnitt an, wodurch die Kontaktfläche im Vergleich zu nur einem an dem Mauerwerksabschnitt anliegenden Rand der Sperrschicht vergrößert wird. In dieser flächigen Ausbildung ist der Teilabschnitt der Abdeckschicht zum einen flexibler als eine senkrecht dazu angeordnete Sperrschicht und kann sich dadurch besser an Unebenheiten des Mauerwerksabschnitts anpassen. Durch die flächige Anlage eines Teilabschnitts der Abdeckschicht am Mauerwerksabschnitt wird zudem die Kontaktfläche vergrößert, wodurch gewährleistet ist, dass der Teilabschnitt auch bei Unebenheiten, an die er sich lokal nicht vollständig anpassen kann, zumindest bereichsweise am Mauerwerksabschnitt anliegt.

Dichtbänder erstrecken sich wesentlich weiter in ihrer Längsrichtung als in ihrer Querrichtung und werden daher zur platzsparenden Lagerung in der Regel um eine Drehachse zu einer Dichtbandrolle (oder Zwischenrolle) aufgewickelt, die sich parallel zur Querrichtung des Dichtbands beziehungsweise der Schaumstoff-Sperrschicht-Bahn erstreckt.

Zum Bereitstellen einer Schaumstoff-Sperrschicht-Bahn sind dem Fachmann verschiedene Verfahren bekannt. Die EP 2 990 551 A1 beschreibt beispielsweise das Einfügen von eine Sperrschicht bildenden Streifen mittels geeigneter Einführwerkzeuge in Einschnitte, die zuvor in eine Schaumstoffbahn eingebracht wurden. Gemäß EP 2 990 552 A1 und EP 2 990 553 A1 können einzelne Schaumstoffstreifen bereitgestellt werden, von denen zumindest einer eine Seitenfläche aufweist, auf die ein Sperrschichtmaterial aufgebracht wurde. Die Schaumstoffstreifen werden derart zusammengeführt und miteinander verbunden, dass das Sperrschichtmaterial zwischen zwei aneinander angrenzenden Schaumstoffstreifen aufgenommen ist. Alternativ beschreibt die EP 2 620 565 A1, dass zumindest ein Einschnitt in eine Schaumstoffbahn eingebracht wird, der diese nicht vollständig durchtrennt, und eine V-förmige Folie anschließend in einen solchen Einschnitt eingefügt wird. Weitere Verfahren sind bekannt, die hier ohne Weiteres eingesetzt werden können.

Im Verhältnis zu den Schaumstoffstreifen aus Weichschaum, weist aber auch die Abdeckschicht eine verhältnismäßig hohe Steifigkeit auf. Der Weichschaum der Schaumstoffstreifen ist flexibler und kann sich noch besser an das Profil des Mauerwerksabschnitts anpassen. Um eine möglichst optimale Anlage des Dichtbands am Mauerwerksabschnitt zu gewährleisten, wird die Abdeckschicht daher in Teilabschnitte getrennt. Dadurch wird erreicht, dass zwischen den Teilabschnitten der Abdeckschicht eine verbesserte Anpassung an das Mauerwerksprofil möglich ist. Eine Abdeckschicht, die sich auf der gesamten Oberseite und/oder Unterseite des Dichtbands erstreckt wäre zu unflexibel, um das Anliegen am Mauerwerksabschnitt über die gesamte Dichtbandbreite zu gewährleisten.

Die Schaumstoff-Sperrschicht-Bahn wird derart zur Dichtbandrolle oder zur Zwischenrolle aufgewickelt, dass die Teilabschnitte der Abdeckschicht flächig zwischen den einzelnen Windungen der jeweiligen Rolle aufgenommen sind. Sind die Teilabschnitte der Abdeckschicht auf der Oberseite der Schaumstoff-Sperrschicht-Bahn angeordnet, grenzen die Teilabschnitte einer Windung an die Unterseite einer angrenzenden Windung an. Entsprechend grenzen Teilabschnitte einer Windung an die Oberseite einer angrenzenden Windung an, wenn sie auf der Unterseite der Schaumstoff-Sperrschicht-Bahn angeordnet sind. Entsprechendes gilt auch für Dichtbandrollen, die durch Aufwickeln von Schaumstoff-Sperrschicht-Streifen gebildet werden.

Vorzugsweise erfolgt das Durchtrennen der Abdeckschicht in Längsrichtung im Bereich jedes Schaumstoffstreifens der Mehrzahl vom Schaumstoffstreifen. Dadurch werden Teilabschnitte gebildet, die jeweils eine Sperrschicht überdecken, während das Dichtband im Bereich jedes Schaumstoffstreifens eine ausreichende Flexibilität aufweist, um sich an das Mauerwerksprofil anzupassen.

Es ist bevorzugt, dass das Durchtrennen der Abdeckschicht in einem Mittelbereich des jeweiligen Schaumstoffstreifens erfolgt, wodurch ein symmetrischer Aufbau des Dichtbands und dadurch möglichst gleichmäßige Dichteigenschaften bewirkt werden. Der Mittelbereich ist symmetrisch zwischen den Seitenflanken des jeweiligen Schaumstoffstreifens angeordnet, wobei die Seitenflanken des Schaumstoffstreifens parallel zu den Seitenflanken der Schaumstoff-Sperrschicht-Bahn verlaufen.

Besonders bevorzugt bilden die Teilabschnitte der Abdeckschicht Streifen, die in Querrichtung nebeneinander angeordnet sind und in Längsrichtung parallel zueinander verlaufen. Vorzugsweise sind die Teilabschnitte dabei in Querrichtung gleichmäßig verteilt, weisen also jeweils denselben Abstand zueinander auf. Auch durch die definierte Ausbildung der Abdeckschicht wird die Gleichmäßigkeit die Dichteigenschaften gewährleistet. Zudem wird erreicht, dass bei genau definierter Anordnung und Geometrie der einzelnen Bestandteile des Dichtbands das Herstellverfahren sowie die Eigenschaften des Dichtbands reproduzierbar sind und die Dichtbandeigenschaften im Einbauzustande möglichst wenig von den theoretisch ermittelten Sollwerten abweichen.

In einer Ausführungsform umfasst die Schaumstoff-Sperrschicht-Bahn eine Mehrzahl von Sperrschichten und ein Teilabschnitt der Abdeckschicht überdeckt zumindest drei nebeneinander angeordnete Schaumstoffstreifen zumindest teilweise. Ist eine entsprechende Anzahl an Schaumstoffstreifen und Sperrschichten vorhanden, können auch weitere Teilabschnitte vorgesehen sein, die zumindest drei nebeneinander angeordnete Schaumstoffstreifen zumindest teilweise überdecken. Ein solcher Teilabschnitt überdeckt dabei die zwei in Querrichtung äußersten Schaumstoffstreifen teilweise und überdeckt den oder die zwischen diesen beiden Schaumstoffstreifen angeordneten Schaumstoffstreifen vollständig. Bei dieser Ausführungsform überdeckt ein solcher Teilabschnitt mindestens zwei Sperrschichten. Dadurch wird das Herstellverfahren vereinfacht und zuverlässiger ausführbar, da die Abdeckschicht an weniger Stellen zu durchtrennen ist. Dennoch kann für eine ausreichende Flexibilität des Dichtbands gesorgt werden.

In einer bevorzugten Ausführungsform umfasst das Durchtrennen der Abdeckschicht das Einbringen zumindest eines Einschnitts in die Abdeckschicht. Das Einbringen eines Einschnitts kann mittels geeigneter Werkzeuge, wie zum Beispiel Schneiden, Messer, Sägen, oder ähnliche ausgeführt werden. Die beschichtete Schaumstoff-Sperrschicht-Bahn wird dazu relativ zu diesen Werkzeugen in Längsrichtung bewegt. Vorzugsweise sind die Werkzeuge in Längsrichtung gesehen in einer festen Position angeordnet und die Schaumstoff-Sperrschicht-Bahn wird entlang der Werkzeuge in Längsrichtung bewegt. Es ist aber auch denkbar, zusätzlich oder alternativ die Werkzeuge in Längsrichtung zu bewegen.

Der zumindest eine Einschnitt kann nur die Abdeckschicht durchtrennen, ohne den darunterliegenden Schaumstoffstreifen zu beschädigen. Da die Abdeckschicht aber sehr dünn ausgebildet sein kann und eine entsprechend geringe Einschnitttiefe schwer kontrollierbar und steuerbar ist, kann der zumindest eine Einschnitt die Abdeckschicht durchtrennen und auch in den jeweiligen Schaumstoffstreifen eindringen. In jedem Fall ist doch zu gewährleisten, dass durch das Eindringen des Einschnitts in den Schaumstoff der Zusammenhalt der Schaumstoff-Sperrschicht-Bahn in Querrichtung nicht negativ beeinflusst wird. Die Tiefe des zumindest einen Einschnitts im Schaumstoffstreifen beträgt daher maximal 1/3, vorzugsweise maximal 1/5 und mehr bevorzugt maximal 1/10 der Dicke des Schaumstoffstreifens zwischen der Oberseite und der Unterseite der Schaumstoff-Sperrschicht-Bahn. Idealerweise beträgt die Tiefe des zumindest einen Einschnitts im jeweiligen Schaumstoffstreifen nicht mehr als 1 mm oder 5 mm. In gar keinem Fall durchtrennt der zumindest eine Einschnitt den jeweiligen Schaumstoffstreifen vollständig. Um auch die Dichteigenschaften des Dichtbands nicht negativ zu beeinflussen, ist die Tiefe des zumindest einen Einschnitts im Schaumstoff so gering wie möglich auszubilden.

Alternativ zum Einbringen zumindest eines Einschnitts umfasst das Durchtrennen der Abdeckschicht in einer besonders bevorzugten Ausführungsform das bereichsweise Abtragen der Abdeckschicht zwischen den zu bildenden Teilabschnitten der Abdeckschicht. Das bereichsweise Abtragen der Abdeckschicht kann das Schmelzen der Abdeckschicht, das Abfräsen der Abdeckschicht oder das Einschneiden und bereichsweise Entfernen der Abdeckschicht umfassen. Alternative Möglichkeiten zum Abtragen der Abdeckschicht sind denkbar und dem Fachmann ersichtlich. Durch das bereichsweise Abtragen der Abdeckschicht wird zwischen den Teilabschnitten der Abdeckschicht der jeweilige Schaumstoffstreifen freigelegt. Dadurch wird erreicht, dass sich im Bereich zwischen den Teilabschnitten der Abdeckschicht der Schaumstoff im Einbauzustand optimal an die Oberfläche des Mauerwerksabschnitts anpassen kann. Im Bereich der Sperrschichten verbleibt dennoch der jeweilige Teilabschnitt der Abdeckschicht, um die Kontaktfläche zum Mauerwerksabschnitt zu vergrößern.

Die Abdeckschicht kann bereichsweise abgetragen werden, ohne dass der darunterliegende Schaumstoff beschädigt wird. Da dies das Verfahren aber aufgrund der geringen Dicke der Abdeckschicht erschwert, ist es auch denkbar, dass auch der Schaumstoff des jeweiligen Schaumstoffstreifens in diesem Bereich geringfügig abgetragen wird. Das bereichsweise Abtragen der Abdeckschicht erfolgt jedoch auch über eine gewisse Breite. Daher ist es hierbei besonders wichtig, nicht tief in den jeweiligen Schaumstoffstreifen einzudringen, um die Dichteigenschaften des Dichtbands nicht unnötig stark negativ zu beeinflussen. Es wird daher maximal 1/3, vorzugsweise maximal 1/5, mehr bevorzugt maximal 1/10 und noch mehr bevorzugt maximal 1/20 der Dicke des Schaumstoffstreifens zwischen der Oberseite und der Unterseite der Schaumstoff-Sperrschicht-Bahn abgetragen.

Erfolgt das bereichsweise Abtragen durch Einschneiden und bereichsweises Entfernen der Abdeckschicht, kann das Einbringen von Einschnitten wie zuvor beschrieben erfolgen. Statt des Einbringens zumindest eines Schnitts in die Abdeckschicht, sind jeweils zwei Einschnitte in Längsrichtung im Bereich eines Schaumstoffstreifens in die Abdeckschicht einzubringen, wobei der Bereich zwischen diesen zwei Einschnitten anschließend entfernt wird. Ist die Abdeckschicht zum Zeitpunkt des Entfernens noch nicht mit dem jeweiligen Schaumstoffstreifen verbunden, ist der zu entfernende Bereich der Abdeckschicht einfach abzunehmen. Ist die Abdeckschicht zu diesem Zeitpunkt lösbar mit dem jeweiligen Schaumstoffstreifen verbunden, kann der zu entfernende Bereich abgezogen werden. Es ist aber auch möglich, dass die Abdeckschicht bereits fest mit dem jeweiligen Schaumstoffstreifen verbunden ist. In diesem Fall ist auch der Schaumstoff geringfügig abzutragen. Beispielsweise ist der abzutragende Bereich der Abdeckschicht anzuheben und ein rotierendes oder sich hin- und herbewegendes Messer kann unterhalb des zu entfernenden Bereichs der Abdeckschicht die Verbindung zum Schaumstoffstreifen lösen.

Um ein möglichst gutes Verhältnis zwischen freiliegendem Schaumstoff, der sich optimal an die Mauerwerksoberfläche anpasst, und den Teilabschnitten der Abdeckschicht zu erreichen, ist es bevorzugt, dass ein Verhältnis aus einer Breite der Teilabschnitte zu einer Breite der Schaumstoffabschnitte zwischen 1:10 und 1:2 beträgt. Bevorzugt beträgt die Breite der Teilabschnitte der Abdeckschicht zwischen 1 mm und 40 mm, mehr bevorzugt zwischen 2 mm und 35 mm, besonders bevorzugt zwischen 5 mm und 30 mm, und die Breite der Bereiche freiliegenden Schaumstoffs beträgt zwischen 0,1 mm und 60 mm, mehr bevorzugt zwischen 1 mm und 50 mm, besonders bevorzugt zwischen 5 mm und 30 mm.

Vorzugsweise umfasst das Verfahren vor dem Durchtrennen der Abdeckschicht das Verbinden der Abdeckschicht mit den Schaumstoffstreifen der Schaumstoff-Sperrschicht-Bahn. Die Abdeckschicht ist dadurch auf der Schaumstoff-Sperrschicht-Bahn fixiert und festgelegt und kann insbesondere beim anschließenden Durchtrennen der Abdeckschicht nicht ungewünscht verschoben oder beeinträchtigt werden.

Vorzugsweise erfolgt mit dem Verbinden der Abdeckschicht mit den Schaumstoffstreifen der Schaumstoff-Sperrschicht-Bahn auch das Verbinden der Abdeckschicht mit der zumindest einen Sperrschicht. Durch das Verbinden der Abdeckschicht mit der zumindest einen Sperrschicht wird erreicht, dass auch der Bereich, in dem die Sperrschicht an den jeweiligen Teilabschnitt der Abdeckschicht angrenzt bzw. auf diesen stößt, die gewünschte Wasserdampfundurchlässigkeit erreicht wird. Die Stoßstelle zwischen Sperrschicht und Teilabschnitt der Abdeckschicht wird dadurch geschlossen und eine Wasserdampfdiffusion durch einen Spalt zwischen Sperrschicht und Teilabschnitt der Abdeckschicht ist nicht möglich.

Alternativ umfasst das Verfahren das Verbinden des zumindest einen Teilabschnitts der Abdeckschicht mit der zumindest einen Sperrschicht, die im Bereich des Teilabschnitts angeordnet ist. Das Verbinden erfolgt folglich erst nach dem Durchtrennen der Abdeckschicht zum Bilden der Teilabschnitte. Beispielsweise erfolgt das Verbinden der Teilabschnitte der Abdeckschicht mit der jeweiligen Sperrschicht während des Komprimierens der Schaumstoff-Sperrschicht-Bahn wenn diese zur Dichtbandrolle oder zu einer Zwischenrolle aufgewickelt wird. Das Verfahren ist dadurch flexibel gestaltbar.

Vorzugsweise erstreckt sich die zumindest eine Sperrschicht von der Oberseite zur Unterseite durch die gesamte Schaumstoff-Sperrschicht-Bahn hindurch. Dadurch wird eine gleichmäßige Wasserdampfundurchlässigkeit über den Dichtbandquerschnitt ermöglicht. Alternativ kann sich die zumindest eine Sperrschicht auch nur über einen Teil der Schaumstoff-Sperrschicht-Bahn zwischen der Oberseite und der Unterseite erstrecken. Vorzugsweise erstreckt sich die zumindest eine Sperrschicht zwischen der Oberseite und der Unterseite der Schaumstoff-Sperrschicht-Bahn über mindestens 50% der Höhe, mehr bevorzugt über mindestens 75% der Höhe, und noch mehr bevorzugt über mindestens 90% der Höhe der Schaumstoff-Sperrschicht-Bahn.

Die Abdeckschicht kann aus demselben Material wie die zumindest eine Sperrschicht gebildet sein. Die Abdeckschicht kann aber auch aus einem anderen Material als die zumindest eine Sperrschicht gebildet sein. Besonders bevorzugt wird die Abdeckschicht aus einem folienartigen Material oder einem Klebstoff, insbesondere aus einer Folienbahn, einem Folienstreifen, einem Klebebandstreifen oder einem klebstoffartigen flüssigen Medium gebildet. Diese Materialien eignen sich besonders gut zum Verwirklichen der Dichtungsanforderungen sowie zum Aufbringen auf und Verbinden mit dem Schaumstoff der Schaumstoffstreifen.

Beispielsweise sind die hierin beschriebenen Sperrschichten und/oder die Abdeckschicht aus einem folienartigen Material, z. B. aus einer Folie aus Polyamid, Polyurethan, Polypropylen oder Copolymeren davon gebildet. Die hierin beschriebenen Sperrschichten und Abdeckschichten können auch aus einem Klebstoff, z. B. einem Dispersionsklebstoff, insbesondere einem Acrylatklebstoff gebildet sein. Sind mehrere Sperrschichten vorgesehen, können diese aus demselben Material oder aus unterschiedlichen Materialien gebildet sein.

Die Sperrschichten und auch die Abdeckschichten können feuchtvariabel ausgebildet sein, d. h. ihr Wasserdampfdiffusionswiderstand ändert sich in Abhängigkeit von der Luftfeuchtigkeit der Umgebung. Kennzeichnend für den Wasserdampfdiffusionswiderstand ist der Wasserdampfdiffusionswert bezogen auf eine Luftschichtdicke in Metern, der sogenannte sD-Wert.

Vorzugsweise weist eine Schicht einen sD-Wert von 0,05 m bis 100 m, mehr bevorzugt von 0,1 m bis 25 m oder von 0,2 m bis 15 m auf (bei 25% relativer Luftfeuchtigkeit (rel. LF)). Die Prüfung des sD-Wertes erfolgt nach DIN EN ISO 12572. Unabhängig hiervon oder in Kombination hiermit kann eine Schicht einen sD-Wert von 0,02 m bis 10 m oder 0,03 m bis 6 m oder 0,05 m bis 2 m bei 72,5% rel. LF aufweisen, gemäß DIN EN ISO 12572. Beispielsweise kann der sD-Wert bei 25% rel. LF im Bereich von 1 bis 10 m und bei 72,5% rel. LF im Bereich von 0,1 bis 5 m liegen. Sofern nach DIN EN ISO 12572 nichts anderes bestimmt, beziehen sich die sD-Werte auf eine Temperatur von 20°C.

Vorzugsweise bestehen die Sperrschichten und/oder die Abdeckschicht mindestens teilweise aus einem synthetischen, wasserquellbaren Polymer.

Sowohl eine Sperrschicht als auch eine Abdeckschicht weisen eine Dicke von 1 µm bis 1 mm auf, vorzugsweise eine Dicke von 1 bis 500 µm oder 2 bis 250 µm, besonders bevorzugt im Bereich von 5 bis 100 µm oder 5 bis 50 µm.

Die Sperrschichten können auch mehrlagig, insbesondere als eine mehrlagige Verbundschicht ausgebildet sein. Ein- oder beidseitig der Funktionsschicht kann jeweils mindestens eine Lage mindestens eines weiteren Materials angeordnet sein. Die eine oder beiden weiteren Lagen, welche die Funktionsschicht jeweils teilweise oder vollständig bedecken, können diese schützen und tragen bzw. unterstützen und die Stabilität der Sperrschichten erhöhen. Die einzelnen Lagen können jeweils aus gleichem oder verschiedenem Material bestehen.

Die ein- oder beidseitig angeordneten Lagen können insbesondere Vliese, Gewebe oder Gitter aus inerten Stoffen wie Polyethylen, Polyurethan, Polypropylen, Polyester, Glasfasern oder Viskose sein, gegebenenfalls auch perforierte Folien, insbesondere solche aus Polyethylen, Polyurethan, Polypropylen oder Polyester. Die Schichten können allgemein aus jedem geeigneten Material bestehen, welches in Schichtform vorliegt und vorzugsweise keine höheren sD-Werte hat als die Funktionsschicht. Die ein- oder beidseitig angeordneten Lagen können aus einem Dispersionsklebstoff bestehen, insbesondere einem Acrylatkleber.

Die Luftdurchlässigkeit der Sperrschichten bzw. Sperrlagen und der Abdeckschicht liegt vorzugsweise im Bereich von 0,01-50 l/(m²s), mehr bevorzugt im Bereich von 0,01-20 l/(m²s). Bevorzugt beträgt die Luftdurchlässigkeit ≤ 3-6 l/(m²s) oder vorzugsweise ≤ 1-2 l/(m²s) oder ≤ 0,2-0,5 l/(m²s) oder besonders bevorzugt ≤ 0,1-0,3 l/(m²s) nach DIN EN ISO 9237; Prüffläche 100 cm² bei einem Messdruck (Unterdruck) von 1,0 mbar, Prüfgerät Frank 21443, oder ist nicht mehr messbar.

Der Schaumstoff des Dichtbands kann aus jedem beliebigen offenzelligen oder geschlossenzelligen Weichschaumstoff gebildet sein, zum Beispiel aus Polyurethan, Polyethylen, Polyvinylchlorid oder Polypropylen, und kann für eine verzögerte Rückstellung nach Kompression imprägniert sein. Das Raumgewicht derartiger Weichschaumstoffe liegt zwischen 20 und 200 kg/m³.

Die einzelnen Schaumstoffstreifen der Schaumstoff-Sperrschicht-Bahn bestehen vorzugsweise aus demselben Material. Alternativ können die Schaumstoffstreifen aus unterschiedlichen Materialien gebildet sein.

Vorzugsweise weist der Weichschaum eine Stauchhärte von mehr als 2 kPa auf. Bevorzugt liegt die Stauchhärte bei mehr als 2,1 kPa, mehr bevorzugt bei mehr als 2,2 kPa, besonders bevorzugt bei mehr als 2,3 kPa. Die Stauchhärte beträgt vorzugsweise weniger als 4 kPa, bevorzugt weniger als 3,8 kPa und mehr bevorzugt weniger als 3,6 kPa. Die Stauchhärte ist ein Maß für die Festigkeit des Schaumstoffes. Die hier angegebenen Werte sind dabei auf eine Kompression von 40% gegenüber der Ausgangshöhe bezogen. Die Stauchhärte wird bestimmt nach DIN EN ISO 3386, es wird der CV40 angegeben.

Die Schaumstoff-Sperrschicht-Bahn wird vorzugsweise zur verzögerten Rückstellung der Dichtbänder wenigstens teilweise und bevorzugt vollständig mit einem Imprägniermittel imprägniert. Das Imprägniermittel weist vorzugsweise eine Acrylatdispersion auf. Bei einer vorteilhaften Ausführungsform weist die Acrylatdispersion in homogener Phase dispergierte Acrylatpolymerteilchen auf. Besonders bevorzugt ist der Schaumstoff mit einem Gewichtsanteil an Acrylatdispersion zur verzögerten Rückstellung derart imprägniert, dass das Dichtband bei 20°C und 50% relativer Luftfeuchtigkeit eine Rückstellung in weniger als 24 Stunden von einem Kompressionsgrad des Dichtbandes von ca. 9% bis 13% bis zum Fugenverschluss aufweist.

Bevorzugt weist ein zur verzögerten Rückstellung imprägnierter Schaumstoff eine Luftdurchlässigkeit in einem Bereich von 50 bis 1.000 l/(m²s), mehr bevorzugt zwischen 60 und 600 l/(m²s) und besonders bevorzugt zwischen 80 und 400 l/(m²s) auf. Die im Rahmen dieser Anmeldung getätigten Angaben zur Luftdurchlässigkeit beziehen sich auf eine Bestimmung unter den Normbedingungen eines 10 mm dicken Schaumstückes (vollständig entspannt) bei einem Messunterdruck von 1,0 bar, Prüffläche 100 cm²; Frank-Gerät 21443; DIN ISO 9237.

Ein beispielhaftes Dichtband weist eine Oberseite, eine Unterseite und zwei die Oberseite und die Unterseite verbindende Seitenflanken sowie eine Längsrichtung auf, die parallel zur Unterseite des Dichtbands ausgerichtet ist. Das Dichtband umfasst eine Mehrzahl von in einer Querrichtung nebeneinander angeordneten Schaumstoffstreifen, wobei sich die Querrichtung parallel zur Unterseite des Dichtbands und quer zur Längsrichtung des Dichtbands erstreckt, sowie zumindest eine Sperrschicht, wobei zwischen jeweils zwei aneinander angrenzenden Schaumstoffstreifen eine Sperrschicht angeordnet ist. Das Dichtband umfasst ferner zumindest einen durchgängigen Teilabschnitt einer Abdeckschicht auf der Oberseite und/oder der Unterseite des Dichtbands, der zwei aneinander angrenzende Schaumstoffstreifen teilweise überdeckt und mit den zwei Schaumstoffstreifen verbunden ist.

Auf diese Weise wird ein Dichtband bereitgestellt, das auf der Oberseite und/oder Unterseite zumindest einen Teilabschnitt einer Abdeckschicht aufweist, die quer zur zumindest einen innenliegenden Sperrschicht ausgerichtet ist und diese überdeckt. Zumindest in einem Einbauzustand des Dichtbands, in dem dieses in eine Fuge zwischen einem Rahmenelement und einem Mauerwerksabschnitt eingefügt ist, grenzt die zumindest eine innenliegende Sperrschicht unmittelbar an den sie überdeckenden Teilabschnitt der Abdeckschicht an, sodass im Wesentlichen keine ungehinderte Wasserdampfdiffusion zwischen der Sperrschicht und dem Teilabschnitt der Abdeckschicht möglich ist. Der Teilabschnitt der Abdeckschicht wiederum liegt flächig am Mauerwerksabschnitt an, wodurch die Kontaktfläche im Vergleich zu nur einem an dem Mauerwerksabschnitt anliegenden Rand der Sperrschicht vergrößert wird. In dieser flächigen Ausbildung ist der Teilabschnitt der Abdeckschicht zum einen flexibler als eine senkrecht dazu angeordnete Sperrschicht und kann sich dadurch besser an Unebenheiten des Mauerwerksabschnitts anpassen. Durch die flächige Anlage eines Teilabschnitts der Abdeckschicht am Mauerwerksabschnitt wird zudem die Kontaktfläche vergrößert, wodurch gewährleistet ist, dass der Teilabschnitt auch bei Unebenheiten, an die er sich lokal nicht vollständig anpassen kann, zumindest bereichsweise am Mauerwerksabschnitt anliegt.

Schließlich ist es bevorzugt, dass der zumindest eine Teilabschnitt der Abdeckschicht mit der Sperrschicht verbunden ist, die im Bereich des Teilabschnitts angeordnet ist. Dadurch wird verhindert, dass sich ein Zwischenraum zwischen der Sperrschicht und dem Teilabschnitt der Abdeckschicht bildet, durch den eine ungehinderte Wasserdampfdiffusion möglich wäre.

Weitere Merkmale und Vorteile der vorliegenden Erfindung ergeben sich aus der nachfolgenden Beschreibung unter Bezugnahme auf die Zeichnungen.
- Fig. 1: zeigt den Schritt des Bereitstellens einer Schaumstoff-Sperrschicht-Bahn gemäß des erfindungsgemäßen Verfahrens in einer perspektivischen Ansicht;
- Fig. 2: zeigt den Schritt des Aufbringens einer Abdeckschicht auf die Schaumstoff-Sperrschicht-Bahn nach Fig. 1 in einer perspektivischen Ansicht;
- Fig. 3: zeigt den Schritt des Durchtrennens der Abdeckschicht gemäß einer ersten Ausführungsform in einer perspektivischen Ansicht;
- Fig. 4: zeigt den Schritt des Durchtrennens der Abdeckschicht gemäß einer alternativen zweiten Ausführungsform in einer perspektivischen Ansicht;
- Fig. 5: zeigt den Schritt des Durchtrennens der Abdeckschicht gemäß einer alternativen dritten Ausführungsform in einer perspektivischen Ansicht;
- Fig. 6: zeigt den Schritt des Bildens einer Dichtbandrolle durch Aufwickeln der beschichteten Schaumstoff-Sperrschicht-Bahn in einer perspektivischen Ansicht;
- Fig. 7: zeigt den Schritt des Bildens einer Dichtbandrolle durch Aufwickeln der beschichteten Schaumstoff-Sperrschicht-Bahn zu einer Zwischenrolle und Durchtrennen der Zwischenrolle zum Bilden einzelner Dichtbandrollen in einer perspektivischen Ansicht;
- Fig. 8: zeigt den Schritt des Bildens einer Dichtbandrolle durch Durchtrennen der beschichteten Schaumstoff-Sperrschicht-Bahn in Schaumstoff-Sperrschicht-Streifen und des Aufwickelns dieser Streifen zu einzelnen Dichtbandrollen Fig. 4 zeigt den Schritt des Durchtrennens der Abdeckschicht gemäß einer alternativen zweiten Ausführungsform in einer perspektivischen Ansicht;
- Fig. 9: zeigt einen Querschnitt einer ersten Ausführungsform eines Dichtbands;
- Fig. 10: zeigt einen Querschnitt einer zweiten Ausführungsform eines Dichtbands;
- Fig. 11: zeigt einen Querschnitt einer dritten Ausführungsform eines Dichtbands;
- Fig. 12: zeigt einen Querschnitt einer vierten Ausführungsform eines Dichtbands; und
- Fig. 13: zeigt einen Einbauzustand eines Dichtbands in einer schematischen Querschnittsansicht.

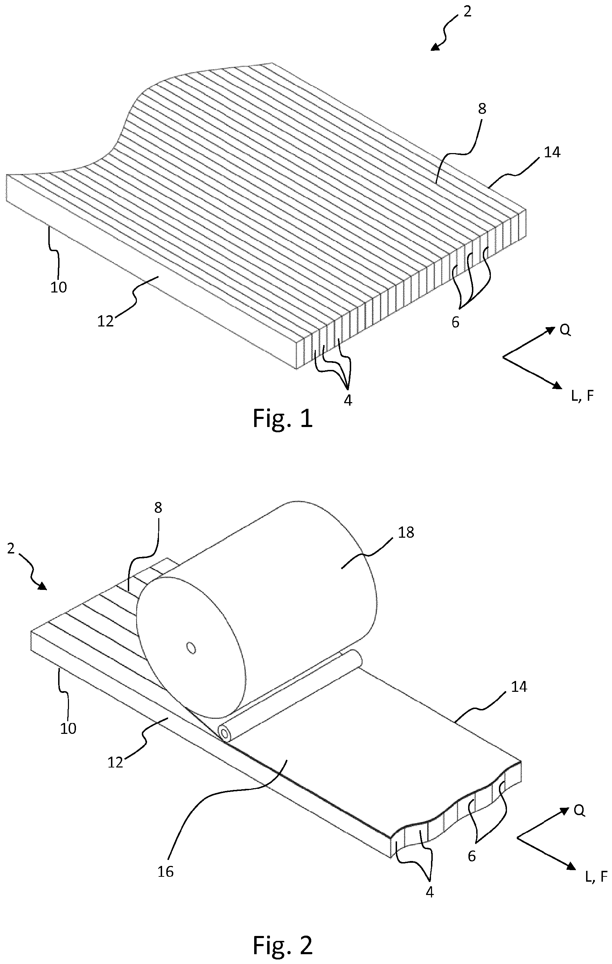

Fig. 1 zeigt in einer isometrischen Ansicht den Schritt des Bereitstellens einer Schaumstoff-Sperrschicht-Bahn 2. Die Schaumstoff-Sperrschicht-Bahn 2 umfasst eine Mehrzahl von Schaumstoffstreifen 4, die in einer Querrichtung Q nebeneinander angeordnet sind. Zudem umfasst die Schaumstoff-Sperrschicht-Bahn 2 zumindest eine Sperrschicht 6, wobei zwischen jeweils zwei aneinander angrenzenden Schaumstoffstreifen 4 eine Sperrschicht 6 angeordnet ist. Vorzugsweise ist jede Sperrschicht 6 mit beiden an sie angrenzenden Schaumstoffstreifen 4 verbunden, beispielsweise verklebt oder auf diese laminiert. Die Anzahl an von der Schaumstoff-Sperrschicht-Bahn 2 umfassten Schaumstoffstreifen 4 und Sperrschichten 6 kann im Wesentlichen beliebig gewählt werden. Eine größere Anzahl von Schaumstoffstreifen 4 uns Sperrschichten 6 hat zur Folge, dass aus der Schaumstoff-Sperrschicht-Bahn 2 gleichzeitig eine Mehrzahl von Dichtbandrollen gewonnen werden kann. Je mehr Dichtbandrollen auf einmal hergestellt werden können, desto effektiver ist das Verfahren.

Die Schaumstoff-Sperrschicht-Bahn 2 weist eine Oberseite 8, eine Unterseite 10 und zwei die Oberseite 8 und die Unterseite 10 verbindende Seitenflanken 12, 14 sowie eine Längsrichtung L auf, die parallel zur Unterseite 10 der Schaumstoff-Sperrschicht-Bahn 2 und quer zur Querrichtung Q ausgerichtet ist. Die Schaumstoff-Sperrschicht-Bahn 2 und die einzelnen Schaumstoffstreifen 4 weisen vorzugsweise einen im Wesentlichen rechteckigen Querschnitt auf. In einem komprimierten Zustand des Schaumstoffs kann die Querschnittsform jedoch abweichen.

Die zumindest eine Sperrschicht 6 kann sich durchgängig von der Unterseite 10 bis zur Oberseite 8 der Schaumstoff-Sperrschicht-Bahn 2 erstrecken oder nur teilweise zwischen der Unterseite 10 und der Oberseite 8 vorgesehen sein. Um die gewünschte Dichtwirkung gegenüber Wasserdampfdiffusion zu bewirken erstreckt sich die zumindest eine Sperrschicht 6 jedoch über mindestens 50%, bevorzugt mindestens 75% und noch mehr bevorzugt über mindestens 90% der Dicke der Schaumstoff-Sperrschicht-Bahn 2.

Die Schaumstoff-Sperrschicht-Bahn 2 wird in eine Förderrichtung F bewegt, die parallel zur Längsrichtung L der Schaumstoff-Sperrschicht-Bahn 2 ausgerichtet ist.

Die Schaumstoffstreifen 4 weisen vorzugsweise alle dieselbe Breite in Querrichtung Q sowie dieselbe Höhe in einer Höhenrichtung senkrecht zur Querrichtung Q und zur Längsrichtung L auf. Die Schaumstoffstreifen 4 können auch von unterschiedlicher Breite und/oder unterschiedlicher Höhe sein, um beispielsweise eine profilierte Schaumstoff-Sperrschicht-Bahn zu bilden. Auch auf den die Seitenflanken 12, 14 bildenden Seitenflächen der jeweils äußersten Schaumstoffstreifen 4 der Schaumstoff-Sperrschicht-Bahn 2 kann wahlweise eine Sperrschicht 6 angeordnet sein.

Dem Fachmann sind eine Reihe verschiedener Verfahren zum Bereitstellen einer Schaumstoff-Sperrschicht-Bahn 2 bekannt. Die EP 2 990 551 A1 beschreibt beispielsweise das Einfügen von eine Sperrschicht 6 bildenden Streifen mittels geeigneter Einführwerkzeuge in Einschnitte, die zuvor in eine Schaumstoffbahn eingebracht wurden. Gemäß EP 2 990 552 A1 und EP 2 990 553 A1 können einzelne Schaumstoffstreifen bereitgestellt werden, von denen zumindest einer eine Seitenfläche aufweist, auf die ein Sperrschichtmaterial aufgebracht wurde. Die Schaumstoffstreifen werden dann derart zusammengeführt und miteinander verbunden, dass das Sperrschichtmaterial zwischen zwei aneinander angrenzenden Schaumstoffstreifen angeordnet ist. Alternativ beschreibt z.B. die EP 2 620 565 A1, dass ein Einschnitt in eine Schaumstoffbahn eingebracht wird, der diese nicht vollständig durchtrennt, und eine V-förmige Folie anschließend in einen solchen Einschnitt eingefügt wird. Alternative Verfahren sind ohne Weiteres einsetzbar.

Fig. 2 zeigt in einer isometrischen Ansicht das Aufbringen einer Abdeckschicht 16 auf die Schaumstoff-Sperrschicht-Bahn 2 nach Fig. 1. In der dargestellten bevorzugten Ausführungsform ist die Abdeckschicht 16 als Folienbahn ausgebildet. Die Abdeckschicht 16 wird auf einer Vorratsrolle 18 bereitgestellt und der Oberseite 8 der Schaumstoff-Sperrschicht-Bahn 2 zugeführt. Analog kann die Abdeckschicht oder eine zusätzliche Abdeckschicht auch der Unterseite 10 der Schaumstoff-Sperrschicht-Bahn 2 zugeführt wird. Die Abdeckschicht 16 kann entsprechend auf die Oberseite 8, die Unterseite 10 oder auf der Oberseite 8 und die Unterseite 10 der Schaumstoff-Sperrschicht-Bahn 2 aufgebracht werden.

Die nachfolgende Beschreibung bevorzugter Ausführungsformen erfolgt überwiegend anhand einer Abdeckschicht 16 auf der Oberseite 8 der Schaumstoff-Sperrschicht-Bahn 2. Es versteht sich, dass die Ausführungen analog auf Ausführungsformen anwendbar sind, bei denen zusätzlich oder alternativ eine Abdeckschicht 16 auf der Unterseite 10 der Schaumstoff-Sperrschicht-Bahn 2 vorgesehen ist. Entsprechende Merkmale lassen sich beliebig kombinieren.

Alternativ kann die Abdeckschicht aus einem klebstoffartigen flüssigen Medium bestehen, das auf bekannte Art und Weise auf die Oberseite 8 und/oder die Unterseite 10 der Schaumstoff-Sperrschicht-Bahn 2 beispielsweise mittels entsprechender Düsen aufgebracht wird.

Unabhängig vom Material und der Art des Aufbringens der Abdeckschicht 16 bedeckt die Abdeckschicht 16 vorzugsweise die gesamte Seite 8, 10 der Schaumstoff-Sperrschicht-Bahn 2, auf die sie aufgebracht wird. Es ist bevorzugt, dass die Abdeckschicht 16 mit dem Aufbringen auf die Schaumstoff-Sperrschicht-Bahn 2 mit den Schaumstoffstreifen 4 verbunden wird. Die Abdeckschicht 16 kann auch gleich mit den Sperrschichten 6 verbunden werden. Beispielsweise kann die Abdeckschicht 16 auf die Schaumstoff-Sperrschicht-Bahn 2 aufgeklebt werden. Hierzu ist die Abdeckschicht 16 entweder mit einem zusätzlichen Klebstoff versehen, als Klebeband ausgebildet oder weist selbst eine gewisse Klebewirkung auf. Eine folienartige Abdeckschicht 16 kann auch auf die Schaumstoff-Sperrschicht-Bahn 2 laminiert werden, wobei die Verbindung unter Wärme- und Druckeinfluss erfolgt. Alternative Verfahren zum Aufbringen einer Abdeckschicht 16 der eingangs genannten Art sind dem Fachmann bekannt und können ohne Weiteres angewendet werden.

Wie dargestellt, werden die Schaumstoff-Sperrschicht-Bahn 2 und die Abdeckschicht 16 während des Aufbringens der Abdeckschicht 16 weiter in Förderrichtung F bewegt.

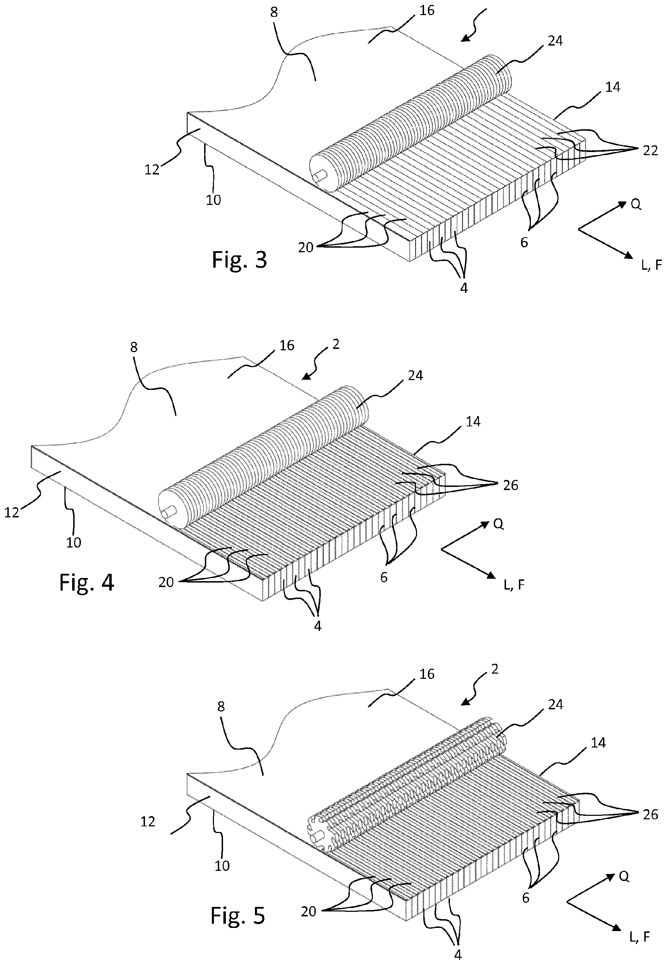

In den Fig. 3 bis 5 sind verschiedene Ausführungsformen des Durchtrennens der Abdeckschicht 16 in einer isometrischen Ansicht dargestellt. Die Abdeckschicht 16 wird in Längsrichtung L im Bereich von zumindest zwei Schaumstoffstreifen 4 und beabstandet zu jeder an diese Schaumstoffstreifen 4 angrenzende Sperrschicht 6 durchtrennt. D.h., dass die Abdeckschicht 16 jeweils in einem Bereich zwischen den zwei Seitenflanken eines Schaumstoffstreifens 4 durchtrennt wird, wobei die Seitenflanken jedes Schaumstoffstreifens 4 parallel zu den Seitenflanken 12, 14 der Schaumstoff-Sperrschicht-Bahn 2 verlaufen.

Durch das Durchtrennen der Abdeckschicht 16 in Längsrichtung L werden Teilabschnitte 20 der Abdeckschicht 16 gebildet, wobei ein Teilabschnitt 20 der Abdeckschicht 16 zumindest zwei aneinander angrenzende Schaumstoffstreifen 4 zumindest teilweise überdeckt. In der dargestellten Ausführungsform nach Fig. 3 bis 5 überdeckt ein Teilabschnitt 20 genau zwei aneinander angrenzende Schaumstoffstreifen 4 teilweise. Ein Teilabschnitt 20 der Abdeckschicht 16 überdeckt folglich jeweils eine innerhalb der Schaumstoff-Sperrschicht-Bahn 2 zwischen diesen zwei Schaumstoffstreifen 4 angeordnete Sperrschicht 6. Da die Abdeckschicht 16 jeweils im Bereich eines Schaumstoffstreifens 4 durchtrennt wird, liegen die in Längsrichtung L verlaufenden Ränder eines Teilabschnitts 20 der Abdeckschicht 16 jeweils zwischen zwei benachbarten Sperrschichten 6 und jeweils beabstandet zu diesen.

Das Durchtrennen der Abdeckschicht 16 in Längsrichtung L kann allgemein durch Einbringen zumindest eines Einschnitts in die Abdeckschicht 16 (Fig. 3) oder durch bereichsweises Abtragen der Abdeckschicht 16 (Fig. 4 und 5) erfolgen.

In Fig. 3 ist eine Ausführungsform dargestellt, bei der das Durchtrennen der Abdeckschicht 16 in Längsrichtung L das Einbringen zumindest eines Einschnitts 22 in die Abdeckschicht 16 umfasst. Vorzugsweise wird die Abdeckschicht 16 im Bereich jedes Schaumstoffstreifens 4 der Mehrzahl von Schaumstoffstreifen 4 in Längsrichtung L durchtrennt. Die Anzahl an Einschnitten 22 entspricht dann der Anzahl von Schaumstoffstreifen 4. Es ist aber auch denkbar, dass weniger Einschnitte 22 als Schaumstoffstreifen 4 vorgesehen sind, wie sich insbesondere anhand der noch folgenden Beschreibung bevorzugter Ausführungsformen eines Dichtbands ergibt.

Zum Einbringen des zumindest einen Einschnitts 22 in die Abdeckschicht 16 ist ein Werkzeug 24 vorgesehen, das die Abdeckschicht 16 durchtrennt. In der dargestellten Ausführungsform ist das Werkzeug 24 walzenförmig ausgebildet und weist eine Mehrzahl von umlaufenden Schneiden auf. Alternativ können auch andere Werkzeuge, z.B. Messer oder Sägen, verwendet werden.

Die Einschnitte 22 verlaufen parallel zueinander, um ebenfalls parallele Teilabschnitte 20 der Abdeckschicht 16 zu bilden. Die Teilabschnitte 20 der Abdeckschicht 16 sind dann streifenförmig ausgebildet. Es ist bevorzugt, dass der zumindest eine Einschnitt 22 nur in die Abdeckschicht 16 eingebracht wird, ohne den Schaumstoff der Schaumstoffstreifen 4 zu beschädigen. Da dies aber ein hohes Maß an Präzision erfordert, kann es auch wünschenswert sein, dass der zumindest eine Einschnitt 22 in die Abdeckschicht 16 eingebracht wird und in den jeweiligen Schaumstoffstreifen 4 eindringt. Das Verfahren wird dadurch einfacher gestaltet.

Um jedoch den Zusammenhalt der Schaumstoff-Sperrschicht-Bahn 2 in der Querrichtung Q zu wahren und die Dichteigenschaften der herzustellenden Dichtbänder nicht negativ zu beeinflussen, ist die Tiefe jedes Einschnitts 22 im Schaumstoffstreifen 4 möglichst gering. Die Tiefe jedes Einschnitts 22 im Schaumstoffstreifen 4 beträgt daher maximal 1/5, vorzugsweise maximal 1/10 und mehr bevorzugt maximal 1/20 der Dicke des Schaumstoffstreifens 4 zwischen der Oberseite 8 und der Unterseite 10 der Schaumstoff-Sperrschicht-Bahn 2. Besonders bevorzugt dringt jeder Einschnitt 22 nicht tiefer als 1 mm bis 2 mm in den jeweiligen Schaumstoffstreifen 4 ein.

Wie in Fig. 3 dargestellt, ist die Oberseite 8 der Schaumstoff-Sperrschicht-Bahn 2 auch nach dem Einbringen des zumindest einen Einschnitts 22 im Wesentlichen vollständig von der Abdeckschicht 16 bedeckt. Dennoch ermöglichen die Einschnitte 22, dass die Abdeckschicht 16 die Flexibilität und Rückstellfähigkeit der Schaumstoffstreifen 4 nicht über die gesamte Breite in Querrichtung Q hinweg beeinflusst. Vielmehr wird eine gewisse Flexibilität zwischen den einzelnen Abschnitten und somit eine bessere Anpassung an die Oberfläche eines Mauerwerkabschnitts des herzustellenden Dichtbands ermöglicht.

Um die Vorzüge der Flexibilität des für die Schaumstoffstreifen 4 verwendeten Schaumstoffs optimal nutzen zu können, ist es jedoch bevorzugt, dass das Durchtrennen der Abdeckschicht 16 das bereichsweise Abtragen der Abdeckschicht 16 zwischen den zu bildenden Teilabschnitten 20 der Abdeckschicht 16 umfasst, wie in den Fig. 4 und 5 dargestellt. In diesen Ausführungsformen werden durch das jeweilige Werkzeug 24 Bereiche 26 der zuvor aufgebrachten Abdeckschicht 16 wieder abgetragen. In den Bereichen 26, in denen die Abdeckschicht 16 wieder abgetragen wird, wird der Schaumstoff der Schaumstoffstreifen 4 freigelegt. Dies ermöglicht, dass sich in einem Einbauzustand des herzustellenden Dichtbands die Oberfläche des Dichtbands in den Bereichen 26 auch an kleine Unebenheiten des Mauerwerkabschnitts anpassen kann. Auch hier bilden die Teilabschnitte 20 parallele und in Längsrichtung L verlaufende Streifen.

Die Breite der Teilabschnitte 20 der Abdeckschicht 16 sowie der Bereiche 26 in Querrichtung Q kann grundsätzlich beliebig gewählt werden. Es versteht sich, dass sich die Breite der Teilabschnitte 20 und der Bereiche 26 gegenseitig beeinflussen. Je breiter die Teilabschnitte 20 der Abdeckschicht 16 ausgebildet sind, desto schmaler werden die Bereiche 26 ausfallen, in denen die Abdeckschicht 16 bereichsweise abgetragen ist, und umgekehrt. Die herzustellenden Dichtbänder sind dadurch an die vorliegenden Anforderungen oder gewünschten Eigenschaften anpassbar.

Auch in diesen Ausführungsformen ist es vorteilhaft, wenn nur die Abdeckschicht 16 bereichsweise abgetragen wird. Da dies allerdings die Komplexität des Verfahrens erhöht, ist es auch denkbar, dass in den Bereichen 26 neben der Abdeckschicht 16 auch der Schaumstoff des jeweiligen Schaumstoffstreifens 4 geringfügig abgetragen wird. Die Tiefe des Eingriffs in den Schaumstoff sollte dabei aber nicht größer ausfallen, als zuvor bezüglich des zumindest einen Einschnitts 22 beschrieben ist.

In der Ausführungsform nach Fig. 4 weist das Werkzeug 24 erneut umlaufenden Schneiden auf, wobei jeweils zwei Schneiden in einem Abstand zueinander angeordnet sind, der der Breite der Bereiche 26 in Querrichtung Q entspricht. Beidseitig jedes Bereichs 26, in dem die Abdeckschicht 16 abzutragen ist, wird dadurch jeweils ein in Längsrichtung L verlaufender Einschnitt in die Abdeckschicht 16 eingebracht. Anschließend kann die in diesem Bereich 26 angeordnete Abdeckschicht entfernt werden. Ist die Abdeckschicht 16 nur lose auf der Schaumstoff-Sperrschicht-Bahn 2 angeordnet oder lösbar mit dieser verbunden, kann die Abdeckschicht 16 einfach abgenommen oder abgezogen werden. Ist die Abdeckschicht 16 fest mit der Schaumstoff-Sperrschicht-Bahn 2 verbunden, kann es notwendig sein, mit einem zusätzlichen Schneidwerkzeug die Abdeckschicht 16 in den Bereichen 26 vom jeweils darunterliegenden Schaumstoff der Schaumstoffstreifen 4 zu lösen.

Das Werkzeug 24 nach Fig. 4 kann auch ein Oberflächenprofil aufweisen, wobei z.B. umlaufend Vorsprünge auf der Mantelfläche des Werkzeugs 24 ausgebildet sind, deren Breite der Breite der Bereiche 26 entspricht. Zumindest diese Vorsprünge können beheizt sein, sodass die Abdeckfolie 16 in den Bereichen 26 geschmolzen und dadurch abgetragen wird. Die Konturen der Teilabschnitte 20 der Abdeckschicht 16 sind dann in der Regel ungleichmäßig und die Teilabschnitte 20 bilden nicht zwingend parallel verlaufende Streifen. Die Abdeckschicht kann auch mittels anderer Wärmequellen, bspw. mittels Laser, aufgeschmolzen und dadurch abgetragen werden.

Dem Fachmann sind ohne Weiteres alternative Werkzeuge zum Einbringen von Einschnitten oder zum Schmelzen der Abdeckschicht 16 in den Bereichen 26 ersichtlich.

In Fig. 5 ist eine Ausführungsform des Werkzeugs 24 dargestellt, dass sich zum Abfräsen der Abdeckschicht in den Bereichen 26 eignet. Das Werkzeug 24 ist wieder im Wesentlichen walzenförmig ausgebildet und weist entlang über den Umfang verteilt eine Mehrzahl von Schneiden auf, die entsprechend des Abstands der Bereiche 26 voneinander beabstandet sind. Auch hier sind ohne Weiteres alternative Gestaltungen des Werkzeugs 24 ersichtlich.

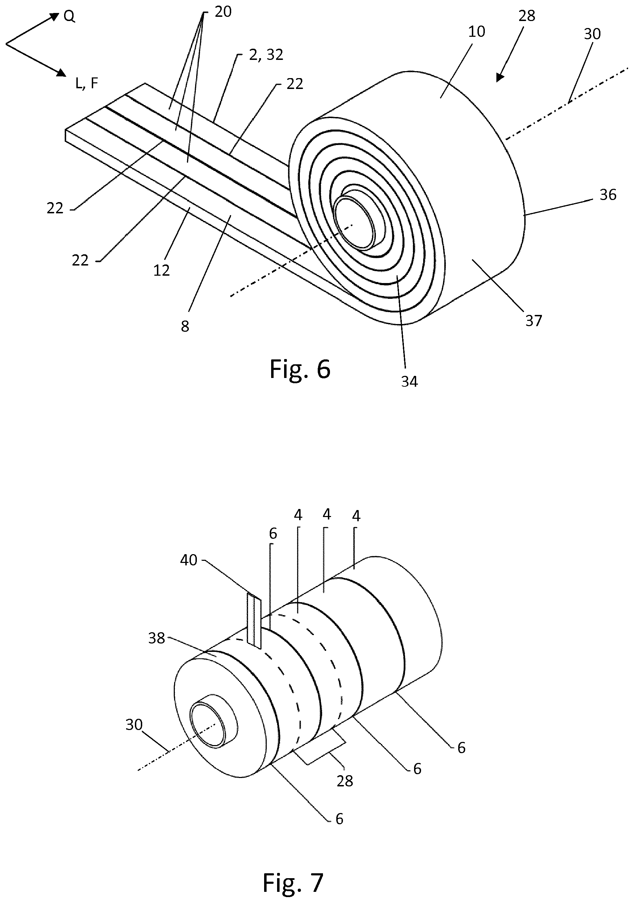

Fig. 6 zeigt in einer isometrischen Ansicht den Schritt des Bildens einer Dichtbandrolle 28 gemäß einer ersten Alternative durch Aufwickeln der beschichteten Schaumstoff-Sperrschicht-Bahn 2 um eine Drehachse 30 zu einer Dichtbandrolle 28. Diese erste Alternative des Bildens einer Dichtbandrolle 28 ist insbesondere dann vorteilhaft, wenn die Breite der Schaumstoff-Sperrschicht-Bahn 2 in Querrichtung Q bereits der Breite des herzustellenden Dichtbands 32 entspricht. Die Schaumstoff-Sperrschicht-Bahn 2 weist folglich bereits die Anzahl an Schaumstoffstreifen 4 und Sperrschichten 6 auf, die das herzustellende Dichtband 32 aufweisen soll. Die beschichtete Schaumstoff-Sperrschicht-Bahn 2 ist dann lediglich um die Drehachse 30, die sich parallel zur Querrichtung Q erstreckt, zur Dichtbandrolle 28 aufzuwickeln. Das Verfahren zur Herstellung einer Dichtbandrolle 28 wird dadurch besonders einfach gestaltet.

Beim Aufwickeln wird die Schaumstoff-Sperrschicht-Bahn 2 bzw. das Dichtband 32 komprimiert, um eine platzsparende Lagerung zu ermöglichen. Es ist denkbar, dass erst zu diesem Zeitpunkt der erforderliche Druck aufgebracht wird, um die Abdeckschicht 16 bzw. deren Teilabschnitte 20 mit der zumindest einen Sperrschicht 6 zu verbinden.

Die Schaumstoff-Sperrschicht-Bahn 2 bzw. das Dichtband 32 werden derart aufgewickelt, dass die Teilabschnitte 20 der Abdeckschicht 16 einer Windung der Dichtbandrolle 28 flächig an der Unterseite 10 der Schaumstoff-Sperrschicht-Bahn 2 bzw. des Dichtbands 32 einer angrenzenden Windung anliegen. Die Seitenflanken 12, 14 der Schaumstoff-Sperrschicht-Bahn 2 bilden Stirnflächen 34, 36 der Dichtbandrolle 28.

Ferner kann vor oder während des Aufwickelns zur Dichtbandrolle 28 eine Klebeschicht 37 auf die Unterseite 10 der Schaumstoff-Sperrschicht-Bahn bzw. des Dichtbands aufgebracht werden. Mittels der Klebeschicht 37 kann das Dichtband 32 einfach an einem Rahmenelement befestigt werden. Die Klebeschicht 37 kann durch ein folienförmiges oder zähflüssiges Klebemittel gebildet sein, z.B. durch ein doppelseitiges Klebeband. Vorzugsweise ist die Klebeschicht 37 von einer Abziehschicht (nicht dargestellt) bedeckt, die verhindert, dass aneinander angrenzende Windungen der Dichtbandrolle 28 verkleben und die Klebeschicht 37 beschädigt oder verschmutzt wird. Die Klebeschicht 37 ist auf die Seite 8, 10 der Schaumstoff-Sperrschicht-Bahn aufzubringen, die der Seite 8, 10, die die Abdeckschicht 16 aufweist, gegenüberliegt. Es ist auch denkbar, dass die Abdeckschicht 16 selbst die Funktion der Klebeschicht 37 übernimmt.

Fig. 7 zeigt in einer isometrischen Ansicht das Bilden einer Dichtbandrolle 28 gemäß einer zweiten Ausführungsform durch Aufwickeln der beschichteten Schaumstoff-Sperrschicht-Bahn 2 um eine Drehachse 30 zu einer Zwischenrolle 38 und Durchtrennen der Zwischenrolle 38 an einer oder an mehreren Stellen in axialer Richtung, um eine Mehrzahl an Dichtbandrollen 28 zu erzeugen, die weniger breit sind als die Zwischenrolle 38. Durch Durchtrennen der Zwischenrolle 38 an einer oder an mehreren Stellen in axialer Richtung kann aus einer Schaumstoff-Sperrschicht-Bahn 2 eine Mehrzahl von Dichtbandrollen 28 gewonnen werden. Die Dichtbandrollen 28 können eine beliebige Anzahl von innenliegenden Sperrschichten 6 aufweisen, sofern die Schaumstoff-Sperrschicht-Bahn 2 entsprechend dimensioniert und ausgelegt ist. Die Stellen des Durchtrennens der Zwischenrolle 38 sind entsprechend zu wählen.

Das Durchtrennen der Zwischenrolle 38 kann mittels eines Messers 40 oder anderer geeigneter Werkzeuge erfolgen, wie z.B. durch Sägen oder Wasserstrahlschneiden. Wie zuvor erwähnt, wird die Schaumstoff-Sperrschicht-Bahn 2 auch zum Aufwickeln auf die Zwischenrolle 38 komprimiert. Entsprechend kann auch das Verbinden der Teilabschnitte 20 der Abdeckschicht 16 mit den Sperrschichten 6 erst zu diesem Zeitpunkt erfolgen, falls gewünscht.

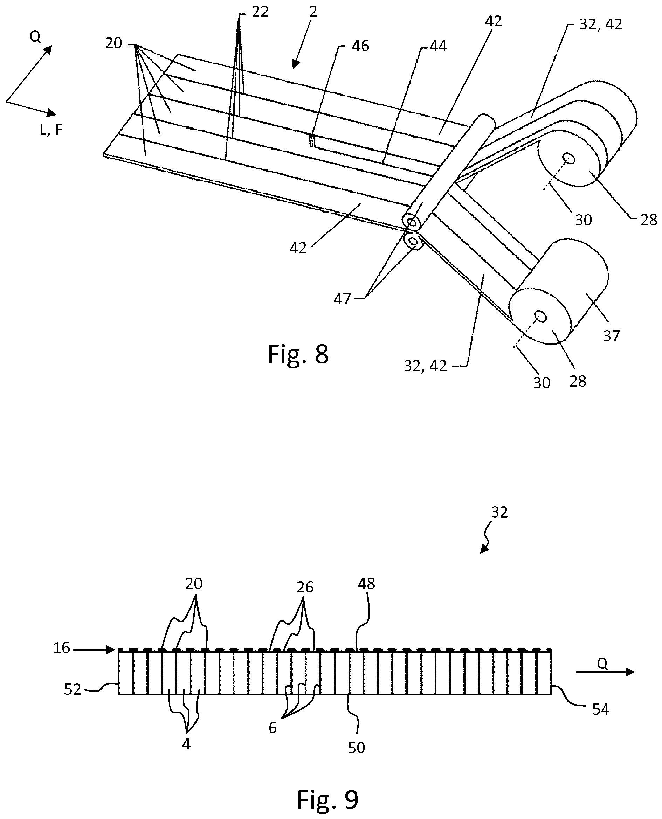

Fig. 8 zeigt den Schritt des Bildens einer Dichtbandrolle 28 gemäß einer dritten Ausführungsform durch Durchtrennen der beschichteten Schaumstoff-Sperrschicht-Bahn 2 in Längsrichtung L zur Bildung von Schaumstoff-Sperrschicht-Streifen 42 und Aufwickeln der Schaumstoff-Sperrschicht-Streifen 42 um eine Drehachse 30 zu einzelnen Dichtbandrollen 28. Zum Durchtrennen der beschichteten Schaumstoff-Sperrschicht-Bahn 2 wird in diese zumindest ein Schnitt 44 eingebracht, der die Schaumstoff-Sperrschicht-Bahn 2 vollständig durchtrennt, um eine Mehrzahl von in Querrichtung Q nebeneinander angeordneten Schaumstoff-Sperrschicht-Streifen 42 zu bilden. Der Schnitt 44 wird beispielsweise mittels eines Messers 46 eingebracht, wobei auch hier alternative Mittel wie Sägen oder Wasserstrahlschneiden denkbar sind.

Im Bereich der Rollen 47 können die Schaumstoff-Sperrschicht-Streifen 42 komprimiert werden, um anschließend um eine Drehachse 30 zu jeweils einer Dichtbandrolle 28 aufgewickelt zu werden. Die Drehachse 30 erstreckt sich auch hier parallel zur Querrichtung Q. Folglich entspricht ein Schaumstoff-Sperrschicht-Streifen 42 einem Dichtband 32 und die Breite jedes Schaumstoff-Sperrschicht-Streifens 42 bzw. dessen Anzahl von Schaumstoffstreifen 4 und innenliegenden Sperrschichten 6 ist entsprechend zu wählen. Auch hier kann eine zusätzliche Klebeschicht 37 gemäß den obigen Ausführungen vorgesehen sein.

In den Fig. 9 bis 12 sind jeweils in einer Querschnittsansicht verschiedene Ausführungsformen eines Dichtbands 32 dargestellt. Da die Breite bzw. die Anzahl von Schaumstoffstreifen 4 und Sperrschichten 6 eines Dichtbands 32 sowie einer zur Herstellung derselben vorgesehenen Schaumstoff-Sperrschicht-Bahn 2 grundsätzlich beliebig wählbar sind, sind die folgenden Ausführungen zu den Fig. 9 bis 12 analog auf eine Schaumstoff-Sperrschicht-Bahn 2 nach Fig. 1 bis 8 anwendbar. Die unter Bezug auf die Fig. 9 bis 12 beschriebenen Merkmale lassen sich daher sowohl auf eine solche Schaumstoff-Sperrschicht-Bahn 2 übertragen als auch auf die jeweils anderen dargestellten Ausführungsformen des Dichtbands 32. Die beschriebenen Merkmale sind grundsätzlich frei miteinander kombinierbar. Die Aufteilung in die Ausführungsformen nach Fig. 9 bis 12 dient lediglich der besseren Übersicht, da nicht alle Merkmale in einer Ausführungsform dargestellt sind. Denkbare Kombinationen der beschriebenen Merkmale sind für den Fachmann ohne Weiteres ersichtlich, ohne für jede Merkmalskombination eigens abzubilden.

Grundsätzlich weist ein Dichtband 32 eine Oberseite 48, eine Unterseite 50 und zwei die Oberseite 48 und die Unterseite 50 verbindende Seitenflanken 52, 54 auf. Ein Dichtband 32 weist weiterhin eine Längsrichtung L auf, die hier parallel zur Unterseite 50 des Dichtbands 32 ausgerichtet ist. In den Fig. 9 bis 12 ist die Längsrichtung L senkrecht zur Zeichenebene ausgerichtet.

Die Oberseite 48 und die Unterseite 50 des Dichtbands 32 entsprechen der Oberseite 8 und der Unterseite 10 der Schaumstoff-Sperrschicht-Bahn 2 und die Längsrichtung L des Dichtbands 32 ist parallel zur Längsrichtung L der Schaumstoff-Sperrschicht-Bahn 2 ausgerichtet.

Jedes Dichtband 32 umfasst eine Mehrzahl in Querrichtung Q nebeneinander angeordneten Schaumstoffstreifen 4, wobei sich die Querrichtung Q parallel zur Unterseite 50 des Dichtbands 32 und quer zur Längsrichtung L des Dichtbands 32 erstreckt. Das Dichtband 32 umfasst ferner mindestens eine Sperrschicht 6, wobei zwischen jeweils zwei aneinander angrenzenden Schaumstoffstreifen 4 eines Sperrschicht 6 angeordnet ist. Ferner umfasst jedes Dichtband 32 zumindest einen durchgängigen Teilabschnitt 20 einer Abdeckschicht 16 auf der Oberseite 48 und/oder der Unterseite 50 des Dichtbands 32, der zwei aneinander angrenzende Schaumstoffstreifen 4 teilweise überdeckt und mit den zwei Schaumstoffstreifen 4 verbunden ist. Bevorzugt ist der zumindest eine Teilabschnitt 20 der Abdeckschicht 16 mit der Sperrschicht 6 verbunden, die im Bereich des jeweiligen Teilabschnitts 20 angeordnet ist.

In der Ausführungsform nach Fig. 9 ist die Abdeckschicht 16 in Längsrichtung L im Bereich jedes Schaumstoffstreifens 4 der Mehrzahl von Schaumstoffstreifen 4 durchtrennt, vorzugsweise durch bereichsweises Abtragen der Abdeckschicht 16 in den Bereichen 26 zwischen den zu bildenden Teilabschnitten 20 der Abdeckschicht 16. Dadurch, dass jeder Teilabschnitt 20 der Abdeckschicht 16 dann zwei aneinander angrenzende Schaumstoffstreifen 4 teilweise überdeckt und mit diesen zwei Schaumstoffstreifen verbunden ist, überdeckt jeder Teilabschnitt 20 genau eine Sperrschicht 6. Vorzugsweise ist jeder Teilabschnitt 20 mit dieser Sperrschicht 6 verbunden, beispielsweise verklebt oder laminiert.

Aus der Querschnittsansicht ist ersichtlich, dass dadurch die Kontaktfläche, mit der eine Sperrschicht 6 in einem Einbauzustand an einem Mauerwerksabschnitt anliegen kann, durch die Teilabschnitte 20 vergrößert wird. Dies wird anhand der Fig. 14 weiter verdeutlicht.

Es ist bevorzugt, dass das Durchtrennen der Abdeckschicht 16 jeweils in einem Mittelbereich des jeweiligen Schaumstoffstreifens 4 erfolgt. Ein Einschnitt 22, der zum Durchtrennen der Abdeckschicht 16 in diese eingebracht wird, oder ein Bereich 26, in dem die Abdeckschicht 16 bereichsweise abgetragen wird, ist folglich mittig und in Längsrichtung L verlaufend auf der die Oberfläche 48 des Dichtbands 32 bildenden Oberfläche eines jeden Schaumstoffstreifens 4 angeordnet. Jeder Einschnitt 22 oder Bereich 26 ist somit symmetrisch zwischen den Seitenflanken eines Schaumstoffstreifens 4 angeordnet, die parallel zu den Seitenflanken 52, 54 des Dichtbands 32 verlaufen. Jeder Einschnitt 22 oder Bereich 26 ist aber auch in Querrichtung Q beabstandet zu einer Sperrschicht 6 angeordnet, um zu gewährleisten, dass jede Sperrschicht 6 von einem Teilabschnitt 20 der Abdeckschicht 16 überdeckt wird.

Es ist ferner ersichtlich, dass sich die Sperrschichten 6 vorzugsweise durchgehend von der Unterseite 50 zur Oberseite 48 des Dichtbands 32 (und somit auch durchgehend von der Unterseite 10 zur Oberseite 8 der Schaumstoff-Sperrschicht-Bahn 2) erstrecken. Es ist auch denkbar, dass sich die Sperrschichten 6 nur teilweise durch das Dichtband 32 hindurch erstrecken, beispielsweise abwechselnd von der Oberseite 48 und der Unterseite 50, oder dass sich ein Teil der Sperrschichten 6 durchgehend von der Unterseite 50 zur Oberseite 48 des Dichtbands 32 erstreckt und sich die übrigen Sperrschichten 6 nur teilweise durch das Dichtband 32 hindurch erstrecken. Die Ausbildung der Sperrschichten 6 hängt dabei wesentlich von dem Verfahren zum Bereitstellen der Schaumstoff-Sperrschicht-Bahn 2 sowie von den vom Dichtband 32 geforderten Dichteigenschaften, insbesondere bezüglich des Wasserdampfdiffusionswiderstands ab.

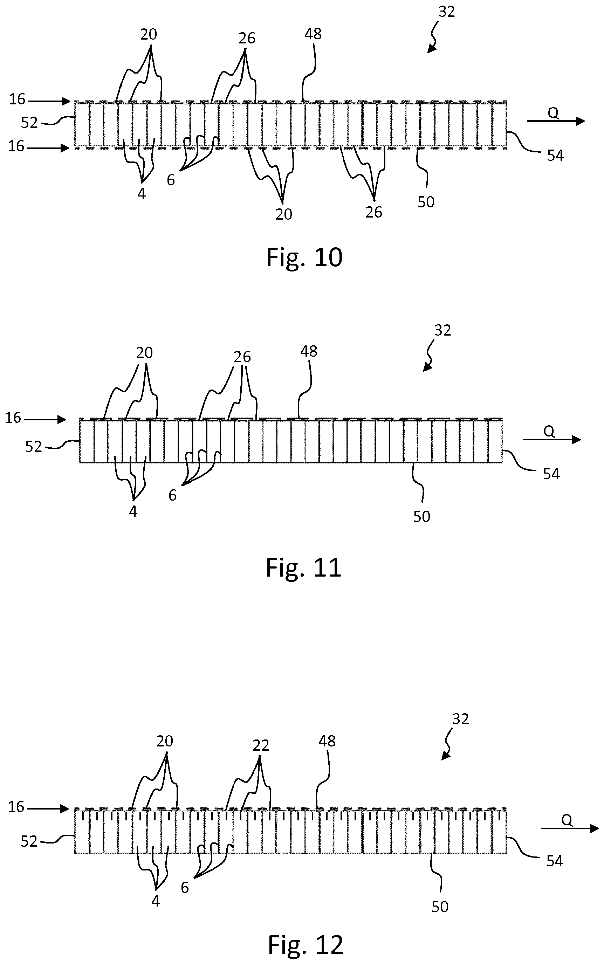

In Fig. 10 ist ersichtlich, dass eine Abdeckschicht 16 auf der Oberseite 48 des Dichtbands 32 (bzw. der Oberseite 8 der Schaumstoff-Sperrschicht-Bahn 2) und eine Abdeckschicht 16 auf der Unterseite 50 des Dichtbands 32 (bzw. der Unterseite 10 der Schaumstoff-Sperrschicht-Bahn 2) angeordnet sein kann. Die Abdeckschicht 16 auf der Unterseite 50 kann dabei identisch zur Abdeckschicht 16 auf der Oberseite 48 ausgebildet sein, d.h. aus demselben Material gebildet sein und Teilabschnitte 20 aufweisen, die symmetrisch zu den Teilabschnitten 20 der Abdeckschicht 16 auf der Oberseite 48 angeordnet und gebildet wurden. Die Abdeckschicht 16 auf der Unterseite 50 kann aber auch von der Abdeckschicht 16 auf der Oberseite 48 verschieden sein, beispielsweise aus einem anderen Material bestehen, andere Dimensionen aufweisen oder durch andere Mittel gebildet werden.

In der Ausführungsform nach Fig. 11 umfasst das Dichtband 32 (und somit auch die Schaumstoff-Sperrschicht-Bahn 2) eine Mehrzahl von Sperrschichten 6 und ein Teilabschnitt 20 der Abdeckschicht 16 überdeckt zumindest drei nebeneinander angeordnete Schaumstoffstreifen 4 zumindest teilweise. Genauer überdeckt ein Teilabschnitt 20 in der dargestellten Ausführungsform einen Schaumstoffstreifen 4 vollständig und die links und rechts an diesen angrenzenden Schaumstoffstreifen 4 jeweils teilweise. Bevorzugt ist jeder Teilabschnitt 20 mit allen drei zumindest teilweise von ihm überdeckten Schaumstoffstreifen 4 verbunden.

Es versteht sich, dass die Teilabschnitte 20 auf diese Weise auch mehr als drei Schaumstoffstreifen 4 überdecken können. Dabei überdeckt jeder Teilabschnitt 20 die in Querrichtung Q äußersten Schaumstoffstreifen 4 der von ihm überdeckten Schaumstoffstreifen 4 teilweise und die zwischen diesen angeordneten Schaumstoffstreifen 4 vollständig. Zudem überdeckt jeder Teilabschnitt 20 der Abdeckschicht 16 alle Sperrschichten 6, die zwischen den von ihm überdeckten Schaumstoffstreifen 4 angeordnet sind. Es ist jedoch darauf zu achten, dass es bevorzugt ist, eine ausreichende Anzahl von Teilabschnitten 20 zu erzeugen, um die erforderliche Flexibilität der Oberseite 48 des Dichtbands 2 zu gewährleisten. Auch die derart ausgebildeten Teilabschnitte 20 der Abdeckschicht 16 können durch Durchtrennen der Abdeckschicht 16 mittels zumindest einen Einschnitts 22 oder durch bereichsweises Abtragen der Abdeckschicht 16 erzeugt werden.

In Fig. 12 ist eine Ausführungsform dargestellt, bei der die Abdeckschicht 16 durch Einbringen zumindest eines Einschnitts 22 durchtrennt wurde. Wie aus Fig. 12 ersichtlich ist, dringen die Einschnitte 22 auch in den Schaumstoff der jeweiligen Schaumstoffstreifen 4 ein. Der Zusammenhalt des Dichtbands 32 in Querrichtung Q sowie die Dichteigenschaften des Dichtbands 32 werden nicht wesentlich beeinflusst, wenn die Tiefe der Einschnitte 22 in den Schaumstoffstreifen 4 gering ist, vorzugsweise maximal 1 bis 2 mm beträgt. Insbesondere soll das Einbringen der Einschnitte 22 auch in den Schaumstoff der Schaumstoffstreifen 4 nicht dazu führen, dass sich die dadurch gebildeten Abschnitte des Dichtbands 32 voneinander wegklappen oder die Schaumstoffstreifen 4 gar ganz durchtrennt werden. Ein solcher mangelnder Zusammenhalt in Querrichtung Q verringert die Steifigkeit des Dichtbands 32 in Querrichtung Q und verschlechtert somit die Handhabung des Dichtbands 32.

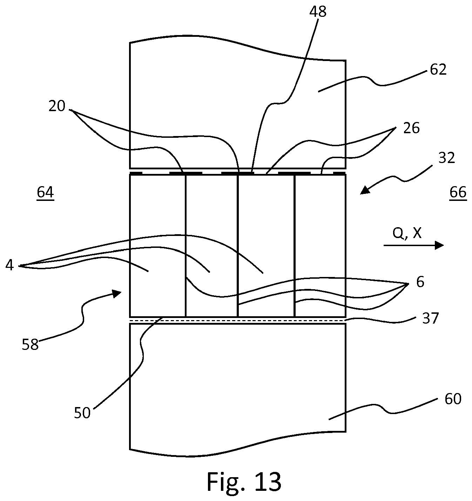

In Fig. 13 ist schließlich schematisch ein Einbauzustand eines Dichtbands 32 dargestellt. In diesem Einbauzustand ist das Dichtband 32 in eine Fuge 58 eingefügt, die zwischen einem Rahmenelement 60 (beispielsweise eines Fensters oder einer Tür) und einem Mauerwerksabschnitt 62 gebildet ist. Die Fuge 58 erstreckt sich von einer Rauminnenseite 64 zu einer Raumaußenseite 66 zwischen dem Rahmenelement 60 und dem Mauerwerksabschnitt 62. Das Dichtband 32 ist derart in der Fuge 58 angeordnet, dass die Querrichtung Q des Dichtbands 32 von der Rauminnenseite 64 zur Raumaußenseite 66 oder andersherum gerichtet ist und die Längsrichtung L (senkrecht zur Zeichenebene) in der Fuge um das Rahmenelement 60 umlaufend verläuft.

Das Dichtband 32 ist üblicherweise mittels einer Klebeschicht 37 auf seiner Unterseite 50 am Rahmenelement 60 befestigt und liegt mit der Oberseite 48 am Mauerwerksabschnitt 62 an. Die Sperrschichten 6 erstrecken sich umlaufend um das Rahmenelement 60 in der Fuge 58, also in Längsrichtung, sowie vom Rahmenelement 60 zum Mauerwerksabschnitt 62. Auf diese Weise dichtet das Dichtband 32 die Fuge 58 in einer Funktionsrichtung X, die parallel zur Querrichtung Q gerichtet ist, zwischen der Rauminnenseite 64 und der Raumaußenseite 66 ab.

An der Oberseite 48 des Dichtbands 32 sind die Teilabschnitte 20 der Abdeckschicht 16 angeordnet und vorzugsweise sowohl mit den angrenzenden Schaumstoffstreifen 4 als auch mit der jeweils zumindest einen angrenzenden Sperrschicht 6 verbunden. Dadurch wird die Anlagefläche zwischen der Sperrschicht 6 und dem Mauerwerksabschnitt 62 vergrößert, wodurch gewährleistet wird, dass zumindest ein Teil der dem Mauerwerksabschnitt 62 zugewandten Oberfläche des Teilabschnitts 20 am Mauerwerksabschnitt 62 anliegt. Da der Teilabschnitt 20 weiterhin mit der Sperrschicht 6 verbunden ist, wird erreicht, dass keine Wasserdampfdiffusion um die Sperrschicht 6 herum zwischen einem Rand derselben und dem Mauerwerksabschnitt 62 erfolgen kann, aber auch nicht zwischen der Sperrschicht 6 und dem jeweiligen Teilabschnitt 20 der Abdeckschicht 16. Die Wasserdampfundurchlässigkeit des Dichtbands 32 wird dadurch erhöht. Es versteht sich, dass das Dichtband 32 auch derart in der Fuge 58 angeordnet sein kann, dass die Unterseite 50 des Dichtbands 32 am Mauerwerksabschnitt 62 anliegt und die Oberseite 48 des Dichtbands 32 am Rahmenelement 60 anliegt. Alternativ können auch sowohl die Oberseite 48 als auch die Unterseite 50 des Dichtbands 32 mit Teilabschnitten 20 einer Abdeckschicht 16 versehen sein. Alle anderen hierin beschriebenen Ausführungsformen können analog in eine entsprechende Fuge eingefügt werden.

## Patentansprüche

1. Verfahren zum Herstellen einer Dichtbandrolle (28) mit den Schritten:
Bereitstellen einer Schaumstoff-Sperrschicht-Bahn (2), die eine Mehrzahl von in einer Querrichtung (Q) nebeneinander angeordneten Schaumstoffstreifen (4) und zumindest eine Sperrschicht (6) umfasst, wobei zwischen jeweils zwei aneinander angrenzenden Schaumstoffstreifen (4) eine Sperrschicht (6) angeordnet ist, wobei die Schaumstoff-Sperrschicht-Bahn (2) eine Oberseite (8), eine Unterseite (10) und zwei die Oberseite (8) und die Unterseite (10) verbindende Seitenflanken (12, 14) und eine Längsrichtung (L) aufweist, die parallel zur Unterseite (10) der Schaumstoff-Sperrschicht-Bahn (2) und quer zur Querrichtung (Q) ausgerichtet ist;
Aufbringen einer Abdeckschicht (16) auf die Oberseite (8) und/oder die Unterseite (10) der Schaumstoff-Sperrschicht-Bahn (2) zum Bilden einer beschichteten Schaumstoff-Sperrschicht-Bahn (2);
**gekennzeichnet durch**:
Durchtrennen der Abdeckschicht (16) in Längsrichtung (L) im Bereich von zumindest zwei Schaumstoffstreifen (4) und beabstandet zu jeder an diese Schaumstoffstreifen (4) angrenzenden Sperrschicht (6) und dadurch Bilden von Teilabschnitten (20) der Abdeckschicht (16), wobei ein Teilabschnitt (20) der Abdeckschicht (16) zumindest zwei aneinander angrenzende Schaumstoffstreifen (4) zumindest teilweise überdeckt; und
Bilden einer Dichtbandrolle (28) durch
(i) Aufwickeln der beschichteten Schaumstoff-Sperrschicht-Bahn (2) um eine Drehachse (30) zu einer Dichtbandrolle (28); oder
(ii) Aufwickeln der beschichteten Schaumstoff-Sperrschicht-Bahn (2) um eine Drehachse (30) zu einer Zwischenrolle (38) und Durchtrennen der Zwischenrolle (38) an einer oder an mehreren Stellen in einer axialen Richtung, um eine Mehrzahl von Dichtbandrollen (28) zu erzeugen, die weniger breit sind als die Zwischenrolle (38); oder
(iii) Durchtrennen der beschichteten Schaumstoff-Sperrschicht-Bahn (2) in Längsrichtung (L) zur Bildung von Schaumstoff-Sperrschicht-Streifen (42) und Aufwickeln der Schaumstoff-Sperrschicht-Streifen (42) um eine Drehachse (30) zu einzelnen Dichtbandrollen (28).

2. Verfahren nach Anspruch 1, **dadurch gekennzeichnet, dass** das Durchtrennen der Abdeckschicht (16) in Längsrichtung (L) im Bereich jedes Schaumstoffstreifens (4) der Mehrzahl von Schaumstoffstreifen (4) erfolgt.

3. Verfahren nach Anspruch 1 oder 2, **dadurch gekennzeichnet, dass** das Durchtrennen der Abdeckschicht (16) in einem Mittelbereich des jeweiligen Schaumstoffstreifens (4) erfolgt.

4. Verfahren nach einem der vorangehenden Ansprüche, **dadurch gekennzeichnet, dass** die Teilabschnitte (20) der Abdeckschicht (16) Streifen bilden, die in Querrichtung (Q) nebeneinander angeordnet sind und in Längsrichtung (L) parallel zueinander verlaufen.

5. Verfahren nach einem der Ansprüche 1, 3 oder 4, **dadurch gekennzeichnet, dass** die Schaumstoff-Sperrschicht-Bahn (2) eine Mehrzahl von Sperrschichten (6) umfasst und ein Teilabschnitt (20) der Abdeckschicht (16) zumindest drei nebeneinander angeordnete Schaumstoffstreifen (4) zumindest teilweise überdeckt.

6. Verfahren nach einem der vorangehenden Ansprüche, **dadurch gekennzeichnet, dass** das Durchtrennen der Abdeckschicht (16) das Einbringen zumindest eines Einschnitts (22) in die Abdeckschicht (16) umfasst.

7. Verfahren nach Anspruch 6, **dadurch gekennzeichnet, dass** der zumindest eine Einschnitt (22) nur in die Abdeckschicht (16) eingebracht wird, oder dass der zumindest eine Einschnitt (22) in die Abdeckschicht (16) eingebracht wird und in den jeweiligen Schaumstoffstreifen (4) eindringt, wobei die Tiefe des zumindest einen Einschnitts (22) im Schaumstoffstreifen (4) maximal 1/5, vorzugsweise maximal 1/10 und mehr bevorzugt maximal 1/20 der Dicke des Schaumstoffstreifens (4) zwischen der Oberseite (8) und der Unterseite (10) der Schaumstoff-Sperrschicht-Bahn (2) beträgt.

8. Verfahren nach einem der Ansprüche 1 bis 5, **dadurch gekennzeichnet, dass** das Durchtrennen der Abdeckschicht (16) das bereichsweise Abtragen der Abdeckschicht (16) zwischen den zu bildenden Teilabschnitten (20) der Abdeckschicht (16) umfasst.

9. Verfahren nach Anspruch 8, **dadurch gekennzeichnet, dass** das bereichsweise Abtragen der Abdeckschicht (16) das Schmelzen der Abdeckschicht (16), das Abfräsen der Abdeckschicht (16) oder das Einschneiden und bereichsweise Entfernen der Abdeckschicht (16) umfasst.

10. Verfahren nach einem der vorangehenden Ansprüche, **dadurch gekennzeichnet, dass** es vor dem Durchtrennen der Abdeckschicht (16) das Verbinden der Abdeckschicht (16) mit den Schaumstoffstreifen (4) der Schaumstoff-Sperrschicht-Bahn (2) umfasst.

11. Verfahren nach Anspruch 10, **dadurch gekennzeichnet, dass** mit dem Verbinden der Abdeckschicht (16) mit den Schaumstoffstreifen (4) der Schaumstoff-Sperrschicht-Bahn (2) auch das Verbinden der Abdeckschicht (16) mit der zumindest einen Sperrschicht (6) erfolgt.

12. Verfahren nach einem der Ansprüche 1 bis 10, **dadurch gekennzeichnet, dass** es das Verbinden zumindest eines Teilabschnitts (20) der Abdeckschicht (16) mit der zumindest einen Sperrschicht (6) umfasst, die im Bereich des Teilabschnitts (20) angeordnet ist.

13. Verfahren nach einem der vorangehenden Ansprüche, **dadurch gekennzeichnet, dass** sich die zumindest eine Sperrschicht (6) von der Oberseite (8) zur Unterseite (10) durch die gesamte Schaumstoff-Sperrschicht-Bahn (2) hindurch erstreckt.

14. Verfahren nach einem der vorangehenden Ansprüche, **dadurch gekennzeichnet, dass** die Abdeckschicht (16) aus einem folienartigen Material oder einem Klebstoff, insbesondere aus einer Folienbahn, einem Folienstreifen, einem Klebebandstreifen oder einem klebstoffartigen flüssigen Medium gebildet wird.

## Claims

1. Method for producing a roll of sealing tape (28), having the following steps:
providing a foam barrier-layer sheet (2), which comprises a plurality of foam strips (4) arranged next to one another in a transverse direction (Q) and at least one barrier layer (6), wherein a barrier layer (6) is arranged between each two mutually adjacent foam strips (4), wherein the foam barrier-layer sheet (2) has a top side (8), a bottom side (10), two side flanks (12, 14), which connect the top side (8) and the bottom side (10), and a longitudinal direction (L), which is aligned parallel to the bottom side (10) of the foam barrier-layer sheet (2) and transversely to the transverse direction (Q);
applying a cover layer (16) to the top side (8) and/or the bottom side (10) of the foam barrier-layer sheet (2) so as to form a coated foam barrier-layer sheet (2);
**characterized by**:
severing the cover layer (16) in the longitudinal direction (L) in the region of at least two foam strips (4) and at a distance from each barrier layer (6) adjoining these foam strips (4) and thereby forming sub-portions (20) of the cover layer (16), wherein a sub-portion (20) of the cover layer (16) at least partially overlaps at least two mutually adjacent foam strips (4); and
forming a roll of sealing tape (28) by
(i) winding up the coated foam barrier-layer sheet (2) around an axis of rotation (30) so as to form a roll of sealing tape (28); or
(ii) winding up the coated foam barrier-layer sheet (2) around an axis of rotation (30) so as to form an intermediate roll (38) and severing the intermediate roll (38) at one or more points in an axial direction, in order to create a plurality of rolls of sealing tape (28) that are less wide than the intermediate roll (38); or
(iii) severing the coated foam barrier-layer sheet (2) in the longitudinal direction (L) so as to form foam barrier-layer strips (42), and winding up the foam barrier-layer strips (42) around an axis of rotation (30) so as to form individual rolls of sealing tape (28).

2. Method according to Claim 1, **characterized in that** the cover layer (16) is severed in the longitudinal direction (L) in the region of each foam strip (4) of the plurality of foam strips (4).

3. Method according to Claim 1 or 2, **characterized in that** the cover layer (16) is severed in a central region of the respective foam strip (4).

4. Method according to one of the preceding claims, **characterized in that** the sub-portions (20) of the cover layer (16) form strips that are arranged next to one another in the transverse direction (Q) and run parallel to one another in the longitudinal direction (L).

5. Method according to one of Claims 1, 3 and 4, **characterized in that** the foam barrier-layer sheet (2) comprises a plurality of barrier layers (6), and a sub-portion (20) of the cover layer (16) at least partially overlaps at least three foam strips (4) arranged next to one another.

6. Method according to one of the preceding claims, **characterized in that** the severing of the cover layer (16) comprises introducing at least one cut (22) into the cover layer (16).

7. Method according to Claim 6, **characterized in that** the at least one cut (22) is introduced only into the cover layer (16), or **in that** the at least one cut (22) is introduced into the cover layer (16) and penetrates the respective foam strip (4), wherein the depth of the at least one cut (22) in the foam strip (4) is at most 1/5, preferably at most 1/10 and more preferably at most 1/20 of the thickness of the foam strip (4) between the top side (8) and the bottom side (10) of the foam barrier-layer sheet (2).

8. Method according to one of Claims 1 to 5, **characterized in that** the severing of the cover layer (16) comprises stripping the cover layer (16) in certain regions between the sub-portions (20) of the cover layer (16) that are to be formed.

9. Method according to Claim 8, **characterized in that** the stripping of the cover layer (16) in certain regions comprises melting the cover layer (16), milling off the cover layer (16), or cutting the cover layer (16) and, in certain regions, removing it.

10. Method according to one of the preceding claims, **characterized in that** it comprises connecting the cover layer (16) to the foam strips (4) of the foam barrier-layer sheet (2) before the severing of the cover layer (16) .

11. Method according to Claim 10, **characterized in that** connecting the cover layer (16) to the at least one barrier layer (6) also takes place concomitantly with the connecting of the cover layer (16) to the foam strips (4) of the foam barrier-layer sheet (2).

12. Method according to one of Claims 1 to 10, **characterized in that** it comprises connecting at least one sub-portion (20) of the cover layer (16) to the at least one barrier layer (6) that is arranged in the region of the sub-portion (20).

13. Method according to one of the preceding claims, **characterized in that** the at least one barrier layer (6) extends through the entire foam barrier-layer sheet (2) from the top side (8) to the bottom side (10).

14. Method according to one of the preceding claims, **characterized in that** the cover layer (16) is made from a film-like material or an adhesive, in particular from a film sheet, a film strip, a strip of adhesive tape, or an adhesive-like liquid medium.

## Revendications

1. Procédé de fabrication d'un rouleau de ruban d'étanchéité (28), ledit procédé comprenant les étapes suivantes :
fournir une nappe de couches barrière et de mousse (2) qui comprend une pluralité de bandes de mousse (4), disposées les unes à côté des autres dans une direction transversale (Q), et au moins une couche barrière (6), une couche barrière (6) étant disposée à chaque fois entre deux bandes de mousse adjacentes (4), la nappe de couche barrière et de mousse (2) comportant un côté supérieur (8), un côté inférieur (10) et deux flancs latéraux (12, 14) reliant le côté supérieur (8) et le côté inférieur (10) et présentant une direction longitudinale (L) qui est orientée parallèlement au côté inférieur (10) de la nappe de couche barrière et de mousse (2) et transversalement à la direction transversale (Q) ;
appliquer une couche de recouvrement (16) sur le côté supérieur (8) et/ou le côté inférieur (10) de la nappe de couche barrière et de mousse (2) pour former une nappe de couche barrière et de mousse (2) pourvue d'un revêtement ;
**caractérisé par** les étapes suivantes :
tronçonner la couche de recouvrement (16) dans la direction longitudinale (L) au niveau d'au moins deux bandes de mousse (4) et à distance de chaque couche barrière (6) adjacente à ces bandes de mousse (4) et former ainsi des portions (20) de la couche de recouvrement (16), une portion (20) de la couche de recouvrement (16) recouvrant au moins partiellement au moins deux bandes de mousse adjacentes (4) ; et
former un rouleau de ruban d'étanchéité (28) par
(i) enroulement la nappe de couche barrière et de mousse (2), pourvue d'un revêtement, sur un axe de rotation (30) pour former un rouleau de ruban d'étanchéité (28) ; ou
(ii) enroulement de la nappe de couche barrière et mousse (2), pourvue du revêtement, sur un axe de rotation (30) pour former un rouleau intermédiaire (38) et tronçonner le rouleau intermédiaire (38) en un ou plusieurs emplacements dans une direction axiale pour générer une pluralité de rouleaux de ruban d'étanchéité (28) qui sont moins large que le rouleau intermédiaire (38) ; ou
(iii) tronçonnement de la nappe de couche barrière et de mousse (2), pourvue d'un revêtement, dans la direction longitudinale (L) pour former des bandes de couche barrière et de mousse (42) et enroulement des bandes de couche barrière et de mousse (42) sur un axe de rotation (30) pour former des rouleaux de ruban d'étanchéité individuels (28).

2. Procédé selon la revendication 1, **caractérisé en ce que** le tronçonnement de la couche de recouvrement (16) est effectué dans la direction longitudinale (L) au niveau de chaque bande de mousse (4) de la pluralité de bandes de mousse (4).

3. Procédé selon la revendication 1 ou 2, **caractérisé en ce que** le tronçonnement de la couche de recouvrement (16) est effectué dans une région centrale de la bande de mousse respective (4).

4. Procédé selon l'une des revendications précédentes, **caractérisé en ce que** les portions (20) de la couche de recouvrement (16) forment des bandes qui sont disposées les unes à côté des autres dans la direction transversale (Q) et qui s'étendent parallèlement entre elles dans la direction longitudinale (L).

5. Procédé selon l'une des revendications 1, 3 ou 4, **caractérisé en ce que** la nappe de couche barrière et de mousse (2) comprend une pluralité de couches barrières (6) et une portion (20) de la couche de recouvrement (16) recouvre au moins partiellement au moins trois bandes de mousse (4) disposées les unes à côté des autres.

6. Procédé selon l'une des revendications précédentes, **caractérisé en ce que** le tronçonnement de la couche de recouvrement (16) comprend la réalisation d'au moins une incision (22) dans la couche de recouvrement (16).

7. Procédé selon la revendication 6, **caractérisé en ce que** l'au moins une incision (22) n'est réalisée que dans la couche de recouvrement (16), ou **en ce que** l'au moins une incision (22) est réalisée dans la couche de recouvrement (16) et pénètre dans la bande de mousse respective (4), la profondeur de l'au moins une incision (22) dans la bande de mousse (4) étant de 1/5 maximum, de préférence de 1/10 maximum et plus préférablement de 1/20 maximum, de l'épaisseur de la bande de mousse (4) entre le côté supérieur (8) et le côté inférieur (10) de la nappe de couche barrière et de mousse (2).

8. Procédé selon l'une des revendications 1 à 5, **caractérisé en ce que** le tronçonnement de la couche de recouvrement (16) comprend le retrait par endroits de la couche de recouvrement (16) entre les portions à former (20) de la couche de recouvrement (16).

9. Procédé selon la revendication 8, **caractérisé en ce que** le retrait par endroits de la couche de recouvrement (16) comprend la fusion de la couche de recouvrement (16), le fraisage de la couche de recouvrement (16) ou le découpage et l'enlèvement par endroits de la couche de recouvrement (16).

10. Procédé selon l'une des revendications précédentes, **caractérisé en ce qu'**il comprend la liaison de la couche de recouvrement (16) aux bandes de mousse (4) de la nappe de couche barrière et de mousse (2) avant de tronçonner la couche de recouvrement (16).

11. Procédé selon la revendication 10, **caractérisé en ce que**, lorsque la couche de recouvrement (16) est reliée aux bandes de mousse (4) de la nappe de couche barrière et de mousse (2), la couche de recouvrement (16) est également reliée à l'au au moins une couche barrière (6).

12. Procédé selon l'une des revendications 1 à 10, **caractérisé en ce qu'**il comprend la liaison d'au moins une portion (20) de la couche de recouvrement (16) à l'au moins une couche barrière (6) qui est disposée au niveau de la portion (20) .

13. Procédé selon l'une des revendications précédentes, **caractérisé en ce que** l'au moins une couche barrière (6) s'étend du côté supérieur (8) au côté inférieur (10) à travers toute la nappe de couche barrière et de mousse (2).

14. Procédé selon l'une des revendications précédentes, **caractérisé en ce que** la couche de recouvrement (16) est formée à partir d'un matériau de type film ou d'un adhésif, en particulier d'une nappe de film, d'une bande de film, d'une bande de ruban adhésif ou d'un milieu liquide de type adhésif.
